Europäisches Patentamt

European Patent Office

Office européen des brevets

(11) Veröffentlichungsnummer: **0 539 367 B1**

(12) **EUROPÄISCHE PATENTSCHRIFT**

(45) Veröffentlichungstag der Patentschrift: **22.11.95**

(51) Int. Cl.⁶: $B29C$ **65/18**, B65B 9/04

(21) Anmeldenummer: **91902408.3**

(22) Anmeldetag: **29.01.91**

(86) Internationale Anmeldenummer:
**PCT/DE91/00081**

(87) Internationale Veröffentlichungsnummer:
**WO 92/01553 (06.02.92 92/04)**

(54) **VERFAHREN ZUM VERSCHLIESSEN WENIGSTENS EINER MULDE AUS EINER ANZAHL VON IN EINER PLATTE VORGESEHENEN MULDEN ZUR AUFNAHME VON CHEMISCHEN UND/ODER BIOCHEMISCHEN UND/ODER MIKROBIOLOGISCHEN SUBSTANZEN UND VORRICHTUNG ZUR DURCHFÜHRUNG DES VERFAHRENS.**

(30) Priorität: **18.07.90 DE 4022793**

(43) Veröffentlichungstag der Anmeldung:
**05.05.93 Patentblatt 93/18**

(45) Bekanntmachung des Hinweises auf die Patenterteilung:
**22.11.95 Patentblatt 95/47**

(84) Benannte Vertragsstaaten:
**AT CH DE FR GB IT LI NL**

(56) Entgegenhaltungen:
**EP-A- 0 326 846    CH-A- 273 833**
**DE-A- 2 608 777    DE-U- 1 880 933**
**US-A- 3 251 463    US-A- 4 012 888**
**US-A- 4 582 555**

(73) Patentinhaber: **Max-Planck-Gesellschaft zur Förderung der Wissenschaften e.V.
Bunsenstrasse 10
D-37073 Göttingen (DE)**

(72) Erfinder: **EIGEN, Manfred
Dehio-Weg 14
D-3400 Göttingen (DE)**
Erfinder: **SIMM, Wolfgang
Bahnhofstrasse 3a
D-3405 Rosdorf 1 (DE)**

(74) Vertreter: **Witte, Alexander, Dr.-Ing. et al
Witte, Weller, Gahlert & Otten
Patentanwälte
Rotebühlstrasse 121
D-70178 Stuttgart (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung betrifft ein Verfahren zum Verschließen wenigstens einer Mulde aus einer Anzahl von mit ihren Öffnungen nach oben weisenden Mulden, die in einer Platte vorgesehen sind und zur Aufnahme von chemischen und/oder biochemischen und/oder mikrobiologischen Substanzen dienen, wobei die Platte thermisch verformbar ist und die Öffnungen in ihrer Oberseite münden, mit den Schritten:

a) Auflegen einer thermisch verformbaren Abdeckplatte auf die Oberseite der Platte, wobei zumindest die Öffnung der wenigstens einen zu verschließenden Mulde von einem Bereich der mit ihrer Oberseite nach oben weisenden Abdeckplatte abgedeckt wird und danach

b) Anbringen einer zumindest um die Öffnung der zu verschließenden Mulde herumlaufenden Verbindungsnaht, die zumindest den die Öffnung der zu verschließenden Mulde abdeckenden Bereich mit der Platte verbindet.

Ein Verfahren der vorstehend genannten Art ist aus der DE-GM 18 80 933 bekannt.

Die Erfindung betrifft ferner eine Vorrichtung zum Verschließen wenigstens einer Mulde aus einer Anzahl von mit ihren Öffnungen nach oben weisenden Mulden, die in einer Platte vorgesehen sind und zur Aufnahme von chemischen und/oder biochemischen und/oder mikrobiologischen Substanzen dienen, wobei die Platte thermisch verformbar ist und die Öffnungen in ihrer Oberseite münden, mit einer Aufnahmeeinrichtung zur Aufnahme der ggf. von einer Abdeckplatte abgedeckten Platte, mit einer Schweißeinrichtung zum Verbinden der Abdeckplatte mit der Platte und mit einer Zustelleinrichtung für die Schweißeinrichtung, über die die Schweißeinrichtung mit der die Mulden abdeckenden Abdeckplatte in Kontakt bringbar ist, wobei die Schweißeinrichtung zumindest einen an seiner Stirnseite vorstehende profilierte Bereiche aufweisenden Schweißstempel umfaßt und die Stirnseite des Schweißstempels der Aufnahmeeinrichtung zugekehrt ist.

Eine Vorrichtung der vorstehend genannten Art ist aus der US-A-4,012,888 bekannt.

Das bekannte Verfahren dient zum Verschließen von Kunststoffnapfchen für Serienuntersuchungen in der Diagnostik, um Substanzverluste, Verunreinigungen oder gegenseitige Beeinflussungen der Proben zu vermeiden.

Bei einer aus der DE-GM 18 80 933 bekannten Vorrichtung ist ein Näpfchenblock mit Ausnehmungen vorgesehen, die der Anordnung und Form der Näpfchen entsprechen. Zum Verschließen der Näpfchen oder Mulden wird die Näpfchenfolie in den Näpfchenblock eingelegt und mit einer Deckelfolie abgedeckt. Weiterhin ist eine Spannschiene vorgesehen, die mittels einer Zustelleinrichtung so auf den Näpfchenblock zu bewegt wird, daß die Deckelfolie auf die Näpfchenfolie gedrückt wird.

Zum Verschweißen der Deckelfolie mit der Näpfchenfolie ist eine Schweißeinrichtung vorgesehen, die zwei Heizbänder aufweist, von denen eines in dem Näpfchenblock und das andere in der Spannschiene angeordnet ist. Die Heizbänder bestehen aus ringförmigen Gliedern, die durch Stege miteinander verbunden sind. Zum Verschweißen werden die Heizbänder durch einen Stromstoß impulsartig erhitzt und legen dabei von unterhalb der Näpfchenfolie und von oberhalb der Deckelfolie um jedes zu verschließende Näpfchen herum eine glatte Verbindungsnaht.

Mit dem bekannten Verfahren und der bekannten Vorrichtung können PVC-Folien mit elf in Reihe angeordneten Näpfchen verschlossen werden.

Zum Verschließen von Näpfchenfolien mit dünner Folienstärke und/oder großer Anzahl von Näpfchen sind nach der Erkenntnis der Anmelderin die bekannte Vorrichtung und das bekannte Verfahren nicht geeignet. Bei einer großen Anzahl von Mulden kommt es insbesondere bei dünnen Platten nämlich zu starken Verwindungen der Platte, wenn diese - wie im Laboralltag üblich - transportiert werden. Die dabei auftretenden mechanischen Belastungen führen dazu, daß sich die Deckelfolie großflächig von der Näpfchenfolie wieder löst.

Dies geschieht aber beispielsweise auch dann, wenn sich im Inneren der Näpfchen ein Überdruck einstellt, weil beispielsweise die aufgenommenen Lösungen auf so hohe Temperaturen erwärmt bzw. erhitzt wurden, daß sich die in den Näpfchen eingeschlossene Luft stark ausdehnt.

Die aus der US-A-4,012,888 bekannte Vorrichtung dient zum Formen, Füllen, Kennzeichnen und Versiegeln von Blisterverpackungen zur Aufnahme von Tabletten. Hierzu ist ein Siegelkopf vorgesehen, der eine Ausnehmung zur Aufnahme der die Mulden bildenden Ausstülpungen enthält und um die Ausnehmung herum geprägt ist, so daß das Heißsiegeln ohne unerwünschte Zerstörungen vonstatten geht.

Ferner ist aus der US-A-4,582,555 eine Vorrichtung zum Versiegeln von Teilen zwischen zwei Folienbahnen bekannt, bei der durch entsprechende, zueinander komplementäre Ausbildung von Stegen und Nuten in gegenüberliegenden Siegelwerkzeugen ein höherer Druck bei der Ausbildung der Verbindungsnaht ausgeübt wird. Die Ausgestaltung der Verbindungsnaht ergibt sich dadurch, daß sich die beiden miteinander zu verbindenden Folien in längsverlaufende Nuten einlegen, sich also deren Verlauf anpassen.

Aus der EP-A-0 326 846 ist ein Verfahren zum Heißverkleben bekannt, bei dem die Unterseite einer Deckelfolie mit einer Kleberschicht versehen ist, die durch den erzeugten Druck und die abgegebene Wärme eine Verbindung zwischen der Deckelfolie und einer die Mulden aufweisenden Platte herbeiführt. An dem Werkzeug sind pyramiden- oder pyramidenstumpfförmige Erhebungen vorgesehen, die dazu dienen, daß der Siegeldruck trotz möglicherweise in den Folien bestehender Unebenheiten oder Aufwerfungen gleichmäßig ausgeübt wird.

Ferner ist es aus der CH-A-273 833 bekannt, gegeneinander wirkende Stempel zu verwenden, um Teile zwischen zwei Folien einzuschweißen.

Weitere Platten mit Mulden werden von mehreren Anbietern vertrieben und sind allgemein als Mikrotestplatten oder Mikrotiterplatten bekannt.

Die bekannten Platten weisen einen steifen Boden auf, der von einem hochstehenden Rand allseits umgeben ist. In den über einen Millimeter dicken Boden sind von oben Mulden eingelassen, die in Reihen und Spalten angeordnet sind. Die bekannten Platten werden mit unterschiedlichen Muldenvolumina angeboten, die in der Regel zwischen einigen hundert Mikroliter und einigen Milliliter liegen.

Es ist bekannt, den Rand der Platte mit einem Deckel oder einer Adhäsiv-Folie abzudecken, um die Mulden und den von dem Rand begrenzten Innenraum vor dem Eintrag von Verschmutzungen jeder Art zu schützen.

Die aus Polystyrol oder Polyvinylchlorid bestehenden Platten werden dazu verwendet, Lösungen auf konstanter Temperatur zu halten. Die geschieht entweder zu Lagerungszwecken, beispielsweise in einem Kühlschrank, oder um eine Reaktion bei einer bestimmten Temperatur ablaufen zu lassen. Für das letztere werden die Platten in einen Brutschrank gelegt, der in der Regel auf 37°C eingestellt ist.

Der von dem Deckel abgeschlossene Innenraum weist ein deutlich größeres Volumen auf als die Mulden selbst. Wenn nur wenige der Mulden mit Lösungen gefüllt sind, sind schon mittlere Temperaturen um 50°C ausreichend, um die Lösungen innerhalb kürzester Zeit eintrocknen zu lassen. Dies liegt daran, daß das geringe Volumen der Lösungen nicht ausreicht, um in dem erheblich größeren Innenraum ohne starken Volumenverlust eine gesättigte Wasserdampfatmosphäre zu erzeugen.

Aus diesen Gründen werden die bekannten Platten nur bei tieferen Temperaturen eingesetzt. Darüberhinaus werden auch bei tieferen Temperaturen einige der Mulden häufig mit sogenannten "Opferlösungen" gefüllt, um den Volumenverlust der Reaktionslösungen gering zu halten.

Darüberhinaus sind konisch spitz zulaufende Plastik-Reaktionsgefäße mit einem Schnappdeckel oder einem Schraubdeckel bekannt. Es ist bekannt, den Deckel mit einem sich in das Gefäß hinein erstreckenden Boden zu versehen, um das Luftvolumen über der in dem Reaktionsgefäß aufgenommene Lösung gering zu halten. Auf diese Weise werden Verdunstungs- und Kondensationsprobleme größtenteils vermieden.

Die bekannten Plastik-Reaktionsgefäße sind jedoch in der Regel mehrere Zentimeter hoch und weisen einen Außendurchmesser im Bereich von 12 bis 18 mm auf. Bei einer großen Anzahl von zu bearbeitenden Proben bzw. Lösungen ist der Platzbedarf dementsprechend groß, obwohl jedes einzelne der Reaktionsvolumina im Bereich von wenigen hundert Mikroliter liegt.

Bei einer großen Probenzahl, die schnell mehrere hundert pro Tag betragen kann, müssen außerdem entsprechend viele Deckel geöffnet und wieder geschlossen werden, was sehr zeitaufwendig ist.

Darüberhinaus ist es bekannt, Reaktionslösungen kleiner Volumina in Glaskapillaren einzuschmelzen, um die Lösungen ohne nennenswerte Verdunstungsprobleme auf hohe Temperaturen erhitzen zu können. Dabei werden die Reaktionslösungen jedoch stark erhitzt, so daß dieses außerdem sehr mühselige und oft nicht gelingende Verfahren für viele Reaktionslösungen nicht verwendet werden können.

Viele der neuen chemischen, biochemischen oder mikrobiologischen Methoden erfordern es, die Reaktionslösungen im Laufe des Versuchsablaufes auf verschiedene Temperaturen zu bringen. Die erforderlichen Temperaturen reichen dabei von weit unter 0°C bis über 110°C. Die Reaktionen müssen oft ein bestimmtes Temperaturprofil, das aus mehreren Aufheizungen und/oder Abkühlungen bestehen kann, zyklisch durchlaufen. Insbesondere bei enzymatischen Vorgängen an Nukleinsäuren ist ein Wechsel zwischen hohen Temperaturen um 100°C zum Denaturieren der Nukleinsäuren und niedrigen Temperaturen um 30°C zum Starten der Reaktion erforderlich.

Bei dem aus der eingangs genannten DE-GM 18 80 933 bekannten Verfahren können die Mulden zwar luftdicht abgeschlossen werden, so daß keine Verdunstungsprobleme oder Kontaminationsprobleme zwischen Lösungen in verschiedenen Mulden auftreten, die nach dem bekannten Verfahren und/oder mit der bekannten Vorrichtung gelegten Verbindungsnähte halten jedoch einem Überdruck in den verschlossenen Mulden bzw. starken mechanischen Beanspruchungen durch Verwinden der Platte bzw. der Näpfchenfolie insbesondere bei einer großen Anzahl von Näpfchen nicht stand.

Weiterhin sind aus der "Arbeitsmappe für den Verpackungstechniker, maschinelles Verpacken, neuer Verpackung 8/82, Seiten 797 - 986" Maschinen zum Verpacken von flächigem Stückgut in Schlauchbeuteln bekannt.

Die bekannten Maschinen arbeiten mit hohen Taktraten und formen aus einer Flachfolie einen Schlauchbeutel, der dann mit dem Packgut gefüllt und verschlossen wird. Die mit den bekannten Maschinen erzeugten Verpackungen werden durch wasserdampf- oder aromadichte Nähte verschlossen.

Die Nähte werden erzeugt, indem der Packstoff bzw. die Packfolie zwischen dauerbeheizten Siegelrollenpaaren hindurchbewegt wird, wobei entweder zur Erzielung einer größeren Festigkeit die so entstehenden Nähte mit einer Längsriffelung oder zur Erzeugung dichterer Nähte mit einer Querriffelung versehen werden. Die Riffelungen werden durch ein entsprechendes Profil der Siegelrollen erzeugt.

In den bekannten Maschinen wird entweder einseitig siegelnder Packstoff oder beidseitig siegelnder Packstoff, zumeist mit Lackbeschichtung, verwendet. Je nach der Beschichtung des Packstoffes können so Flossenähte oder Überlappungsnähte erzeugt werden. Die Breite der Siegelnähte soll dabei mindestens 12 - 15 mm betragen.

Eine Verwendung der bekannten Maschinen oder des bekannten Verfahrens zum Verschließen von Platten mit nach oben offenen Mulden ist nicht möglich.

Der Erfindung liegt daher die Aufgabe zugrunde, ein Verfahren der eingangs genannten Art dahingehend weiterzubilden, daß die vorstehend genannten Nachteile vermieden werden. Insbesondere soll es möglich werden, eine ggf. große Anzahl von Reaktionslösungen auch kleiner Volumina bei einfacher Handhabung so zu verschließen, daß nicht nur die Verdunstungs- oder Kondensationsprobleme verringert werden, sondern daß die verschlossenen Platten eine große mechanische Belastbarkeit aufweisen, ohne daß die Verbindungsnähte sich öffnen.

Hinsichtlich des eingangs genannten Verfahrens wird diese Aufgabe dadurch gelöst, daß die Verbindungsnaht zur Vergrößerung der Kontaktfläche zwischen der Oberseite der Platte und der Abdeckplatte im Querschnitt profiliert ausgeführt wird, wobei das Material der Abdeckplatte teilweise in die Oberseite der Platte eindringt.

Hinsichtlich der eingangs genannten Vorrichtung wird diese Aufgabe dadurch gelöst, daß die vorstehenden profilierten Bereiche kranzförmig angeordnete Pyramiden aufweisen, die an ihrer Basis einstückig mit dem Schweißstempel ausgebildet sind sowie mit ihren Spitzen von dem Schweißstempel weg weisen, und daß die Pyramiden zwischen sich eine Aussparung begrenzen, die einen größeren Querschnitt aufweist als die Öffnungen der Mulden und daß die Pyramiden in gegeneinander versetzten Reihen angeordnet sind und eine zwischen ihrer Basis und ihrer Spitze gemessene Höhe aufweisen, die größer ist als die Stärke der Abdeckplatte.

Die der Erfindung zugrundeliegende Aufgabe wird auf diese Weise vollkommen gelöst. Weil mit dem neuen Verfahren die mit Lösungen gefüllten Mulden von einem Bereich der Abdeckplatte abgedeckt und durch die Verbindungsnaht verschlossen werden, ist das Verdunstungs- bzw. Kondensationsproblem in bekannter Weise gelöst. Es gibt über den Proben lediglich solche Luftvolumina, deren Feuchtigkeitsgehalt beim Umtemperieren der Proben von den Proben selbst ohne nennenswerte Volumenänderungen reguliert werden kann, die Proben stehen also unter Sättigungsdruck.

Durch die profilierte Ausführung der Verbindungsnaht wird erreicht, daß die verschlossene Platte eine große mechanische Belastbarkeit aufweist. Beim Einsetzen und Herausnehmen in bzw. aus Haltevorrichtungen ist es unvermeidlich, daß sich die Platte gerade bei einer großen Anzahl von Mulden durchbiegt. Das neue Verfahren ermöglicht es nun, auch eine flexible Platte mit einer sehr großen Probenzahl, diese kann in der Nähe von 1000 liegen, sicher zu handhaben. Auch beim Erhitzen der in den Mulden aufgenommenen Lösungen und/oder Substanzen löst sich die profiliert ausgeführte Verbindungsnaht trotz des ggf. hohen Überdruckes im Inneren der Mulden nicht.

Außerdem ist es bei dem neuen Verfahren nun möglich, eine große Anzahl von Mulden pro Platte vorzusehen, und diese mit einem einzigen Deckel durch das Anlegen der Verbindungsnaht schnell und doch dicht zu verschließen.

Die Maßnahmen bei der neuen Vorrichtung bieten den Vorteil, daß auf einfache Weise wegen der starken Profilierung der Stirnseite des Schweißstempels ein Eindringen des Schweißstempels in die Abdeckplatte die Kontaktfläche zu der Platte erhöht wird. Obwohl als Profilierung auch eine Wellenform möglich ist, hat sich diese Zick-Zack-Form der Profilierung bewährt. Durch die einstückige Anformung der Pyramiden ist ferner für eine gute Temperierung gesorgt.

Bei einer bevorzugten Weiterbildung des neuen Verfahrens umfaßt das Anbringen der Verbindungsnaht das Anbringen einer in sich geschlossenen Verbindungsnaht.

Diese Maßnahme hat den Vorteil, daß die Mulden flüssigkeitsdicht abgeschlossen werden, was insbesondere bei giftigen und/oder infektiösen Lösungen von Vorteil ist.

Besonders bevorzugt ist es bei diesem Verfahren, wenn das Anbringen der Verbindungsnaht das Herstellen einer zumindest abschnittsweise formschlüssigen Verbindung zwischen der Platte und der Abdeckplatte umfaßt.

Diese Maßnahme ermöglicht einen guten mechanischen Halt der Abdeckplatte an der Platte, so daß bei der normalen Handhabung nicht die Gefahr besteht, daß sich die Abdeckplatte wieder löst.

Ein weiterer Vorteil wird bei diesem Verfahren dadurch erreicht, daß für jede Mulde eine eigene Verbindungsnaht angebracht wird.

Durch diese Maßnahme wird verhindert, daß die Reaktionslösungen verschiedener Mulden über die Oberseite der Platte "kriechen" und sich miteinander vermischen. Selbst beim Herunterfallen der verschlossenen Platte bleiben die Lösungen getrennt.

Weiterhin ist es vorteilhaft, wenn die Verbindungsnaht die Mulde gasdicht abschließt.

Diese Maßnahme hat den Vorteil, daß auch bei höheren Temperaturen kein Feuchtigkeitsaustausch zwischen dem in der Mulde aufgenommenen Volumen und der Atmosphäre stattfindet. Da das in der Mulde oberhalb der Reaktionslösung befindliche Luftvolumen klein ist, ist dadurch das Verdunstungsproblem völlig beseitigt.

Bevorzugt ist bei diesem Ausführungsbeispiel weiterhin, wenn das Anbringen der Verbindungsnaht die folgenden Schritte umfaßt:

bb) Aufsetzen eines an seiner Stirnseite vorstehende profilierte Bereiche aufweisenden Schweißstempels mit der Stirnseite auf die Oberseite der Abdeckplatte, wobei die profilierten Bereiche um den die Öffnung abdeckenden Bereich herum mit der Oberseite in Kontakt gelangen; danach

bd) Herunterdrücken des Schweißstempels um eine festgelegte Wegstrecke, so daß die profilierten Bereiche zumindest in die Abdeckplatte eindringen; und danach

c) Entfernen des Schweißstempels von der Abdeckplatte.

Durch diese Maßnahmen gestaltet sich das Erzeugen der profilierten Naht sehr einfach. Das Verfahren ist schnell durchzuführen, so daß auch eine große Anzahl von Mulden einzeln verschlossen werden kann.

Ferner ist es bei diesem Ausführungsbeispiel bevorzugt, wenn

ba) vor dem Aufsetzen des Schweißstempels zumindest dessen Stirnseite auf eine Temperatur in der Nähe der Schmelzpunkttemperatur zumindest der Abdeckfolie aufgeheizt wird, wenn

bc) nach dem Aufsetzen der Stirnseite des Schweißstempels der Schweißstempel für eine festgelegte erste Zeitspanne in dieser Stellung belassen wird und wenn

be) nach dem Herunterdrücken des Schweißstempels in die Abdeckplatte der Schweißstempel für eine festgelegte zweite Zeitspanne in dieser Stellung belassen wird.

Durch diese Maßnahmen werden sämtliche bisher aufgezählten Vorteile vereint. Die einzeln verschlossenen Mulden sind auch bei hohem Druck gasdicht. Auch bei hohen mechanischen Beanspruchungen der Verbindungsnaht, wie sie durch Temperaturspannungen oder Durchbiegen hervorgerufen werden können, geht die Verbindungsnaht nicht auf.

Bei diesem Ausführungsbeispiel ist es weiterhin bevorzugt, wenn die Platte vor dem Anbringen der Verbindungsnaht auf eine Aufnahmeeinrichtung gelegt wird.

Diese Maßnahme bietet den Vorteil, daß die Platte von unten unterstützt wird, so daß die Verbindungsnähte leichter lagerichtig angebracht werden können.

Bevorzugt ist es bei diesem Ausführungsbeispiel ferner, wenn die Aufnahmeeinrichtung auf einer festgelegten Temperatur gehalten wird und die Mulden beim Auflegen auf die Aufnahmeeinrichtung mit dieser in thermischen Kontakt gebracht werden.

Durch das Temperieren der Mulden ist es möglich, auch Reaktionslösungen, die einen bestimmten Temperaturbereich nicht verlassen dürfen, in die Mulden einzuführen und diese danach zu verschließen.

In einer Weiterbildung dieses Ausführungsbeispiels zeichnet sich das neue Verfahren dadurch aus, daß vor dem Aufsetzen der Schweißstempel eine Haltevorrichtung von oben auf die Abdeckplatte gelegt wird, die die Abdeckplatte auf die Oberseite der Platte drückt und die Mulden in engen thermischen Kontakt mit der Aufnahmeeinrichtung bringt.

Durch diese einfache Maßnahme wird erreicht, daß die Verbindungsnähte sowohl gleichzeitig als auch nacheinander gelegt werden können. Die Haltevorrichtung verhindert nämlich, daß beim Abnehmen des Schweißstempels von der Abdeckplatte die noch nicht erkaltete Verbindungsnaht wieder auf geht, falls die Abdeckplatte teilweise an dem Schweißstempel hängen bleibt. Durch die Haltevorrichtung wird also für reproduzierbar gute und dichte Verbindungsnähte gesorgt.

Bevorzugt ist bei diesem Ausführungsbeispiel ferner, wenn die Platte aus einer dünnen Polycarbonatfolie mit einer Stärke geringer als 0,5 mm gefertigt ist, wenn die Abdeckplatte aus einer dünnen Polycarbonatfolie mit einer Stärke geringer als 0,3 mm gefertigt ist, wenn die Mulden eine Wand mit einer Stärke dünner als 0,08 mm und ein Volumen kleiner als 200 mm$^3$ aufweisen, wenn die festgelegte Wegstrecke etwa gleich der Stärke der Abdeckplatte ist, wenn die erste Zeitspanne zwischen 25 Sekunden beträgt, wenn die zweite Zeitspanne zwischen 1 und 5 Sekunden beträgt, und wenn die Temperatur des Schweißstempels zwischen 250°C und 300°C liegt.

Diese Maßnahmen führen dazu, daß sich der die Öffnung der Mulde abdeckende Bereich beim Legen der Verbindungsnaht linsenartig vorwölbt. Dadurch ergibt sich auf einfache Weise ein optischer Test der Gasdichtigkeit, denn nur gasdicht verschlossene Mulden weisen diese Wölbung auf. Die hier verwendete Platte und die Abdeckfolie sind besonders bevorzugt, da sie einen schnellen Wärmedurchtritt wegen der auf das Volumen der Mulden, die Wärmeleitfähigkeit von Polycarbonat und die Außenfläche der Mulden abgestimmten Wanddicke. Daher können auch Lösungen die in einem sehr engen Temperaturbereich gehalten werden müssen, in den Mulden versiegelt werden.

Bei der neuen Vorrichtung wird durch den profilierten Schweißstempel beim Zustellen desselben eine profilierte Verbindungsnaht zwischen der Platte und der Abdeckplatte hergestellt. Diese Maßnahme führt damit zu einer mechanisch belastbaren und auch bei hohen Temperaturen haltenden Verbindungsnaht. Bei dem unvermeidlichen Durchbiegen einer flexiblen Platte mit vielen Mulden treten mechanische Spannungen auf, die die Verbindungsnähte stark belasten. Wegen der profilierten Ausführung der Verbindungsnähte bleiben diese jedoch dicht.

Diese Ausführungsform wird in vorteilhafter Weise dadurch weiter gebildet, daß für jede zu verschließende Mulde ein Schweißstempel vorgesehen ist.

Diese Maßnahme bietet insofern Vorteile, als die Mulden sämtlich voneinander getrennt sind. Auch beim Herunterfallen der verschlossenen Platte vermischen sich die in den Mulden versiegelten Lösungen nicht.

Ferner ist es bei diesem Ausführungsbeispiel bevorzugt, wenn für den zumindest einen Schweißstempel eine Heizvorrichtung vorgesehen ist.

Durch diese Maßnahme werden Verbindungsnähte erzeugt, die auch bei hohem Druck gasdicht sind und großen mechanischen Beanspruchungen standhalten. Durch den heißen Schweißstempel wird nämlich nicht nur eine größere Kontaktfläche zwischen der Abdeckplatte und der Platte erzeugt, sondern zumindest abschnittweise auch eine stoffschlüssige Verbindung hergestellt. Der dazu erforderliche Aufsetzdruck für den Schweißstempel hängt von der Höhe der Temperatur des Schweißstempels ab und ist in der Regel klein.

Ein weiterer Vorteil wird bei diesem Ausführungsbeispiel dadurch erzielt, daß als Heizvorrichtung ein Heizblock aus Metall, vorzugsweise aus Kupfer, vorgesehen ist, mit dem die Stempel in thermischem Kontakt stehen und in dem die Stempel von unten eingesetzt sind.

Durch diese Maßnahme können alle Schweißstempel gleichzeitig erhitzt werden, da der Kupferblock eine so gute Wärmeleitfähigkeit aufweist, daß sich in ihm kein nennenswerter Temperaturgradient ausbildet.

Dieses Ausführungsbeispiel wird besonders vorteilhaft dadurch weitergebildet, daß eine auf die Aufnahmeeinrichtung aufsetzbare Heizvorrichtung für die Platte vorgesehen ist.

Durch diese Maßnahme wird auf einfache Weise verhindert, daß die Abdeckplatte und die Platte gegeneinander verrutschen. Da die Abdeckplatte jetzt dicht an der Oberseite der Platte anliegt, ist das über den in den Mulden befindlichen Lösungen verbleibende Luftvolumen gering.

Eine vorteilhafte Weiterbildung dieser Ausführungsform ist dadurch gekennzeichnet, daß die Haltevorrichtung eine Lochmaske ist, in der für jeden Stempel ein durchgehendes Loch vorgesehen ist, daß bei zwischen der Aufnahmeeinrichtung und der Lochmaske angeordneter Platte mittig und in Längsrichtung zu einer zu verschließenden Mulde ausgerichtet ist.

Mit dieser Maßnahme wird erreicht, daß der die Öffnung der Mulde abdeckende Bereich nach dem Anlegen der Verbindungsnaht eine linsenförmige Vorwölbung aufweist. Dadurch ist ein einfacher optischer Test der Gasdichtigkeit der verschlossenen Mulde möglich.

Besonders bevorzugt ist es bei diesem Ausführungsbeispiel, wenn die Zustellmittel einen elektrisch steuerbaren Motor aufweisen.

Durch diese Maßnahme ergibt sich eine gute und reproduzierbare Steuerung des Schweißstempels, so daß die Eindringtiefe in die Abdeckplatte und die Verweilzeiten auf der Platte sehr genau eingehalten werden können.

Ein weiterer Vorteil wird bei diesem Ausführungsbeispiel erzielt, wenn für die Aufnahmeeinrichtung eine Kühleinrichtung vorgesehen ist.

Auf diese Weise können auch Lösungen, die einen bestimmten Temperaturbereich nicht verlassen dürfen, in den Mulden aufgenommen und mit der Abdeckplatte verschlossen werden. Die beim Legen der Verbindungsnaht ggf. in die Lösungen transportierte Wärme wird augenblicklich von der temperierten Aufnahmeeinrichtung abgeführt.

Bevorzugt ist es bei diesem Ausführungsbeispiel weiterhin, wenn an der Aufnahmeeinrichtung eine Negativform angeordnet ist, die mit den Konturen der Mulden, die nach unten unter die Platte vorstehende Ausstülpungen aufweisen, in Eingriff bringbar sind.

Diese Maßnahme hat den Vorteil, daß die Mulden in engen thermischen Kontakt mit der Aufnahmeeinrichtung stehen, so daß auch Lösungen, die einen sehr engen Temperaturbereich einhalten müssen, oder gar auf Temperaturen unter O° gehalten werden sollen, in den Mulden eingeschlossen werden können.

Ferner ist es bei diesem Ausführungsbeispiel bevorzugt, wenn die Vorrichtung eine Grundplatte aufweist, auf der als Haltevorrichtung ein Aufnahmeblock mit Näpfen als Negativform angeordnet ist, wenn oberhalb der Grundplatte eine den Motor tragende Kopfplatte angeordnet ist, die über Führungsstangen mit der Grundplatte verbunden ist, wenn zwischen der Grundplatte und der Kopfplatte eine von den Führungsstangen geführte Trägerplatte angeordnet ist, die über Getriebemittel mit dem Motor verbunden ist und an der der Heizblock nach unten weisend angeordnet ist, und wenn für die Trägerplatte eine Kühlvorrichtung vorgesehen ist.

Diese Maßnahmen verleihen der Vorrichtung einen einfachen kompakten mechanischen Aufbau, bei dem durch die Kühlung und Führung der Trägerplatte eine verklemmungsfreie Zustellung der Schweißstempel möglich ist.

Die versetzten Reihen erzeugen beim Eindringen des Schweißstempels in die Abdeckplatte ein entsprechendes Negativprofil, was einen großen Strömungswiderstand für Gasmoleküle darstellt, die aus der verschlossenen Mulde entweichen wollen. Diese Ausgestaltung des Schweißstempels erzeugt eine Verbindungsnaht, die auch bei hoher Temperatur gasdicht ist.

Ein weiterer Vorteil wird dadurch erzielt, daß die Pyramiden eine zwischen ihrer Basis und ihrer Spitze gemessene Höhe aufweisen, die größer ist als die Stärke der Abdeckplatte.

Durch diese Maßnahme wird erreicht, daß beim Zustellen der Schweißstempel das Material der Abdeckplatte teilweise in die Oberseite der Platte eindringt. Dies führt noch einmal zu einer mechanisch festeren Verbindungsnaht.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:

Fig. 1 die erfindungsgemäße Platte mit den nach oben offenen Mulden, im Ausschnitt und in einer perspektivischen Darstellung;

Fig. 2 die Platte aus Fig. 1, in einer Schnittdarstellung entlang der Linie II-II aus Fig. 1;

Fig. 3 ein Verfahren zur Herstellung der Platte aus Fig. 1, in einer schematischen Darstellung;

Fig. 4 die Abdeckung einer Platte nach Fig. 1 mit einer Abdeckfolie, im Ausschnitt und in einer perspektivischen Darstellung;

Fig. 5 die abgedeckte Platte aus Fig. 4, mit ringförmigen Verbindungsnähten, die um die Mulden herumgelegt sind und die Abdeckfolie mit der Platte verbinden, in der Ansicht des Pfeiles V aus Fig. 4;

Fig. 6 einen Schweißstempel zum Erzeugen der Verbindungsnähte aus Fig. 5, in einer geschnittenen Teilansicht;

Fig. 7 den Schweißstempel aus Fig. 6, in einer Teilansicht von oben entlang des Pfeiles VII aus Fig. 6;

Fig. 8 die Verbindungsnaht aus Fig. 5, in einer geschnittenen Seitenansicht entlang der Linie VIII-VIII aus Fig. 5;

Fig. 9 eine Vorrichtung zum Verschweißen der abgedeckten Platte aus Fig. 4, in der mehrere der Schweißstempel aus Fig. 6 verwendet werden, in einer perspektivischen Darstellung; und

Fig. 10 die Verwendung der verschweißten Platte aus Fig. 5 in Zusammenhang mit einem Thermoblock, in einer perspektivischen Darstellung und im Ausschnitt.

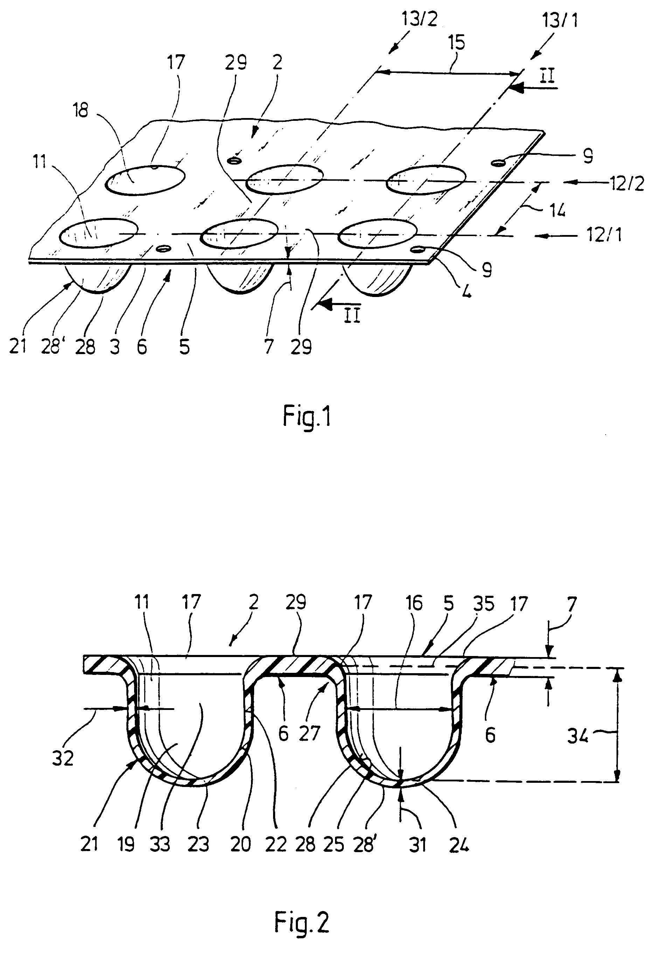

In Fig. 1 ist im Ausschnitt eine rechteckige flexible Platte 2 mit einer ihrer Längskanten 3 sowie einer ihrer Seitenkanten 4 gezeigt. Die bspw. aus einer steifen Kunststoffolie gefertigte Platte 2 weist eine ebene Oberseite 5 und eine dazu parallele Unterseite 6 auf. Ihre zwischen der Oberseite 5 und der Unterseite 6 gemessene Stärke ist bei 7 angedeutet. Wie in Fig. 1 zu erkennen, ist die Stärke 7 klein gegenüber den Querabmaßen der Platte 2.

In der Platte 2 sind Durchgangslöcher 9 vorgesehen und nach oben offene Mulden 11 ausgebildet. Die Mulden 11 sind in Reihen 12 und Spalten 13 angeordnet, wobei die Reihen 12 parallel zu der Längskante 3 und die Spalten 13 parallel zu der Seitenkante 4 verlaufen. Die Reihen 12 bzw. Spalten 13 haben untereinander je einen bei 14 bzw. 15 angedeuteten Reihen- bzw. Spaltenabstand. In dem gezeigten Ausführungsbeispiel weisen die im Querschnitt kreisförmigen Mulden 11 einen in Fig. 2 besser zu erkennenden Innendurchmesser 16 auf. Die Reihenabstände 14 und die Spaltenabstände 15 sind gleich groß, wobei der Innendurchmesser 16 der Mulden 11 selbstverständlich kleiner ist als der Reihenabstand 14 bzw. der Spaltenabstand 15.

Die Mulden 11 liegen mit ihren von einem abgerundeten Öffnungsrand 17 umgebenen Öffnungen 18 in der Ebene der Oberseite 5 der Platte 2. Sie weisen eine ihren Innenraum 19 begrenzende Wandung 20 auf, die in der Art einer becherartigen Ausstülpung 21 ausgebildet ist und bei jeder der untereinander identischen Mulden 11 unterhalb der Unterseite 6 der Platte 2 liegt.

Im weiteren Verlauf der Beschreibung ist mit "nach oben" die Richtung aus dem Innenraum 19 der Mulden 11 durch die Öffnung 18 hinaus bezeichnet und mit "nach unten" dementsprechend die entgegengesetzte Richtung.

Wie besser in Fig. 2 zu erkennen ist, weist die Ausstülpung 21 einen hohlzylindrischen oberen Abschnitt 22 sowie einen damit einstückigen halbkugelförmigen unteren Abschnitt 23 auf, dessen gewölbte Bodenwand 24 die Mulde 11 nach unten abschließt. Die Oberseite 5 geht unter Ausbildung der umlaufenden abgerundeten Kante 17 unmittelbar als Innenfläche 25 in den Innenraum 19 der Mulde 11 über, wobei die Unterseite 6 unter Ausbildung einer um die Ausstülpung 21 umlaufenden Kehlnut 27 als Außenseite 28 der Ausstülpung 21 im wesentlichen parallel zu der gewölbten Innenfläche 25 verläuft. Zwischen den einzelnen Mulden 11 verlaufen Stege 29, die die einzelnen Öffnungen 18 voneinander trennen.

Wie in Fig. 2 weiter zu erkennen ist, weist die Bodenwand 24 eine bei 31 angedeutete Stärke auf, die zwischen der Innenfläche 25 und der Außenseite 28 gemessen ist. Im Bereich des hohlzylindrischen oberen Abschnittes 22 ist eine entsprechend gemessene Stärke bei 32 angedeutet, die ungefähr der Stärke 31 entspricht. Die Mulden 11 weisen je ein Volumen 33 auf, das im wesentlichen von ihrer bei 34 angedeuteten Tiefe sowie dem Innendurchmesser 16 bestimmt ist. Die Tiefe 34 ist zwischen der Bodenwand 24 und einer bei 35 durch eine gestrichelte Linie angedeuteten gedachten maximalen Füllhöhe gemessen. Die Füllhöhe 35 befindet sich etwa auf der Höhe, auf der der gewölbte Öffnungsrand 17 in die senkrechte Innenfläche 25 übergeht. Wegen der Oberflächenspannung und der damit verbundenen Vorkrümmung wird insbesondere bei kleinen Volumina 33 das Füllvolumen der aufzunehmenden Substanzen kleiner sein als das maximale Volumen 33.

Die Mulden 11 der insoweit beschriebenen Platte 2 dienen zur Aufnahme von chemischen und/oder biochemischen und/oder mikrobiologischen Substanzen, die in den Mulden 11 gelagert oder einer Reaktion unterzogen werden. Das Volumen 33 und die Anzahl der Mulden 11 pro Platte 2 hängen dabei von den von den Mulden 11 aufzunehmenden Substanzen ab. Über das Volumen 33 sind neben dem Innendurchmesser 16 und der Tiefe 34 auch der Reihenabstand 14 und der Spaltenabstand 15 weitgehend festgelegt. Die Stärke 7 der Platte 2 im Bereich der Stege 29 ist so gewählt, daß die Platte 2 trotz der dicht zusammenliegenden Mulden 11 eine ausreichende Festigkeit aufweist und beim Transportieren mit gefüllten Mulden 11 nicht durchknickt. Die Stärken 31 und 32 der Wandung 20 der Mulden 11 sind unter mechanischen Gesichtspunkten so gewählt, daß die gefüllten Mulden 11 unter dem Gewicht der aufgenommenen Substanzen nicht einreißen oder gar abreißen.

Neben dem rein mechanischen Gesichtspunkt sind das Material, aus dem die Platte 2 gefertigt ist, und die Stärken 31 bzw 32 der Wandung 20 auch unter physikalischen Gesichtspunkten ausgewählt. Die Stärken 31 und 32, die - wie in Fig. 2 zu erkennen - deutlich geringer sind als die Stärke 7, ermöglichen einen guten Wärmetransport in den Innenraum 19 der Mulden 11 hinein bzw. aus dem Innenraum 19 heraus. Dadurch ist es möglich, die Substanzen in den Mulden sehr schnell abzukühlen bzw. umzutemperieren, indem die ganze Außenseite 28 als Wärmeaustauschfläche 28' mit einem Temperierstoff der jeweils gewünschten Temperatur in Kontakt gebracht wird.

In dem gewählten Ausführungsbeispiel ist die Platte 2 aus Polycarbonat gefertigt und weist eine Wärmeleitfähigkeit von $\lambda$ = 0,21 W pro Kelvin und Meter auf. Die Stärke 7 beträgt ca. 0,27 mm und für die Stärke 31 gilt: x = 0,04 mm. Die Abstände 14 bzw. 15 zwischen den Reihen 12 bzw. den Spalten 13 betragen etwa 10 mm und das Volumen 33 der Mulden 11 liegt bei:
V = 85 $\mu$l. Die Größe der Wärmeaustauschfläche 28' entspricht der Außenseite 28 und beträgt: A = 75 mm$^2$. Gemäß der Formel

$$W = \frac{A \cdot \lambda}{V \cdot x}$$

ergibt sich mit diesen Zahlenwerten ein Wärmedurchtrittswert von ca. 4,5 x 10$^{-3}$ W/(K mm$^3$).

Es hat sich gezeigt, daß für einen solchen Wärmedurchtrittswert der Wärmeaustausch durch die Wandung 20 so schnell erfolgt, daß der bestimmende Zeitfaktor die Wärmeleitung in den Substanzen selbst ist.

Damit ermöglicht es die neue Platte 2 z.B., auf kleinem Raum eine große Anzahl von Reaktionen in getrennten Mulden 11 durchzuführen, wobei sich die Reaktionen durch die Wandung 20 der Mulden hindurch thermisch sehr gut steuern lassen.

Darüberhinaus ist das Material der Platte 2 so gewählt, daß durch die Wandung 20 der Mulden 11 hindurch optische Analyseverfahren, wie z.B. Absorptionsmessungen oder Fluoreszenzmessungen möglich sind. Das Material muß zu diesem Zweck in dem interessierenden Lichtwellenlängenbereich durchsichtig sein, d.h. es darf in diesem Wellenlängenbereich weder nennenswerte Absorption noch Fluoreszenzemission aufweisen.

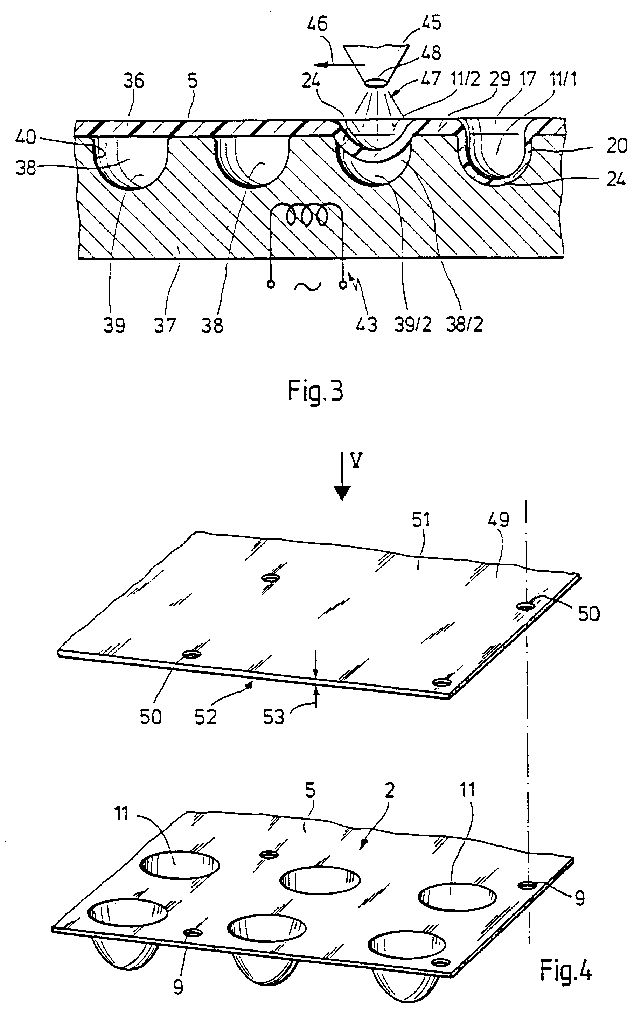

Anhand von Fig. 3 soll jetzt ein Verfahren zur Herstellung der Platte 2 aus Fig. 1 beschrieben werden. Das Ausgangsmaterial ist eine dünne Folie 36, bspw. aus einem Polycarbonat, mit der Stärke 7. Diese Folie 36 wird auf einen temperierten Formblock 37 gelegt, in dem nach oben offene Sacklöcher 38 vorgesehen sind, die wie die Mulden 11 in Reihen 12 und Spalten 13 angeordnet sind. Die Sacklöcher 38 weisen eine ihr Inneres 39 umgebende Wandfläche 40 auf, die glatt und in sich geschlossen ist. Die Abmaße der Sacklocher 38 sind so gewählt, daß sie den Außenabmaßen der zu bildenden Ausstülpungen 21 entsprechen, in dem gewählten Beispiel weisen die Sacklöcher einen Durchmesser von ca. 6 mm und eine Tiefe von ca. 4 mm auf.

In dem aus Metall, bspw. aus Aluminium, gefertigten Formblock 37 ist eine bei 43 schematisch angedeutete Heizung vorgesehen, durch die der Formblock 37 gleichmäßig auf 100 °C aufgeheizt wird. In Richtung der Sacklocher 38 ist oberhalb des Formblockes 37 eine Luftdüse 45 angeordnet, die in Richtung des Pfeiles 46 bewegbar ist. Die Richtung 46 verläuft parallel zu den Spalten 13 bzw. den Reihen 12, so daß die Luftdüse 45 über jedem einzelnen Sackloch 38 mittig positionierbar ist. Die Richtung 46 ist außerdem parallel zu der Oberseite 5 der auf den Formblock 37 aufgelegten Folie 36 ausgerichtet, so daß der Abstand zwischen der Luftdüse und der Oberseite 5 konstant bleibt.

Die Luftdüse 45 gibt einen ca. 280 °C heißen Heißluftstrahl 47 ab, der mit einer Geschwindigkeit von ca. 2 - 5 m/sec aus ihrer Austrittsöffnung 48 in etwa senkrecht zu dem Formblock 37 nach unten austritt. Die Austrittsöffnung 48 hat einen Durchmesser von etwa 5 mm und befindet sich 4 mm oberhalb der Oberseite 5 der Folie 36. Die Luftdüse 45 wird nacheinander mittig über den einzelnen Sacklöchern 38 positioniert, wo sie etwa 3 bis 5 Sekunden stehen bleibt. Durch den auf die Oberseite 5 auftreffenden Heißluftstrahl 47 wird die Folie 36 so weit erwärmt, daß sie plastisch verformbar ist.

Der Heißluftstrahl 47 bläst dann den ursprünglich oberhalb des Sackloches 38 liegenden Bereich der Folie 36 in das Innere 39 des jeweiligen Sackloches hinein, wobei dieser sich allmählich streckt und die ursprüngliche Stärke 7 der Folie 36 sich in diesem Bereich immer weiter verringert, bis schließlich die Wandung 20 der entstandenen Mulde 11 die in Fig. 2 angedeuteten Stärken 31 bzw. 32 aufweist.

In Fig. 3 ist die rechte Mulde 11/1 bereits fertig ausgebildet, und die Luftdüse 45 befindet sich oberhalb des Sackloches 38/2, in dem gerade die Mulde 11/2 ausgebildet wird. Der Boden 24 der Mulde 11/2 hat sich bereits teilweise in das Innere 39/2 der Sackloches 38/2 hineinbewegt und wird sich im weiteren vollflächig an die glatte Innenwand des Sackloches 38/2 anlegen. Wie in Fig. 3 zu erkennen, bleibt zwischen den Mulden 11/1 und 11/2 der Steg 29 in der ursprünglichen Stärke 7 der Folie 36 stehen. Beim Ausformen der Mulden 11 entweicht die eingeschlossene Luft ohne Blasenbildung.

Selbstverständlich ist es möglich, statt einer Luftdüse 45 mehrere parallele Luftdüsen 45 zu verwenden, deren Austrittsöffnungen 48 im Rastermaß der Spalten 13 bzw. der Reihen 12 angeordnet sind. Auf diese Weise lassen sich je nach Anzahl der Luftdüsen 45 alle Mulden 11 einer Reihe 12 oder auch einer Spalte 13 gleichzeitig herstellen.

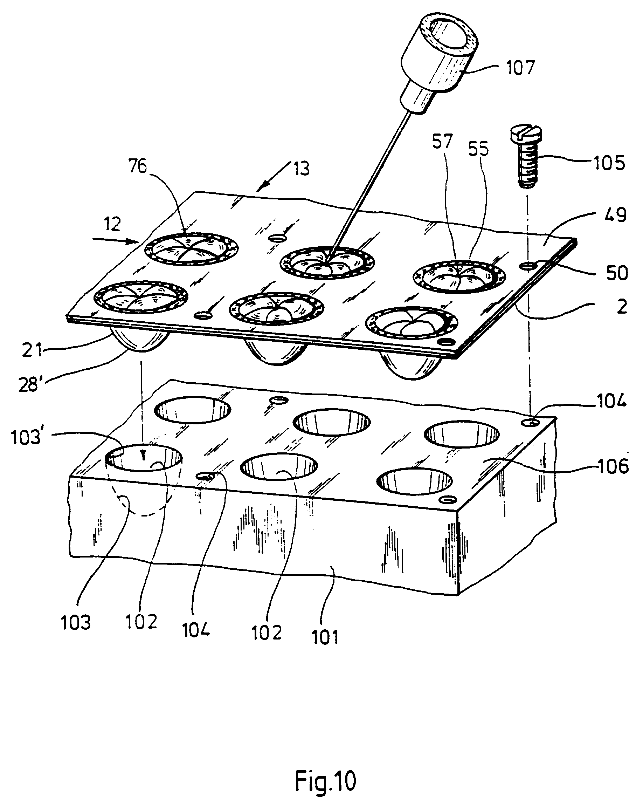

Wie bereits oben beschrieben, besteht die Folie 36 aus einem Polycarbonat der Stärke 0,27 mm. Vor dem Ausformen der Mulden 11 ist die Folie 36 milchig trüb. Es hat sich jedoch gezeigt, daß die Folie 36 bei einer Temperatur des Heißluftstrahles 47 von 280 °C und bei einer Temperatur des Formblockes 37 von 100 °C im Bereich der Wandung 20 der ausgeformten Mulden 11 durchsichtig wird, wie es für die o.g. optischen Analysemethoden erforderlich ist. Das für das eigentliche Ausformen der Mulden 11 nicht erforderliche Temperieren des Formblockes 37 auf 100 °C bewirkt weiterhin, daß die Außenseite 28 der Mulde 11 sich satt an die Wandfläche 40 des jeweiligen Sackloches 38 anlegt. Dadurch wird erreicht, daß die Außenseite 28 einer jeden Mulde 11 ebenfalls eine glatte und gleichmäßige Oberfläche aufweist, was für das Umtemperieren von in den Mulden 11 aufgenommenen Substanzen von großem Vorteil ist. Die Ausstülpungen 21 weisen nämlich nahezu identische Konturen auf, so daß sie mit ihrer Wärmeaustauschfläche 28' ohne den thermischen Übergang störende Luftschichten in unmittelbaren Kontakt mit entsprechend den Sacklochbohrungen 38 ausgebildeten Gegenflächen gebracht werden können. Dies wird weiter unten noch anhand von Fig. 10 beschrieben.

Insbesondere wenn das Volumen 33 der Mulden 11 gering ist, sollten die Mulden 11 gegenüber der Außenatmosphäre abgeschlossen werden. Zu diesem Zweck ist eine in Fig. 4 dargestellte Abdeckplatte vorgesehen, die aus einer dünnen Abdeckfolie 49 besteht. In der Abdeckfolie 49 sind Durchgangslöcher 50 vorgesehen, die in demselben Rastermaß angeordnet sind, wie die Durchgangslocher 9 in der Platte 2. Die Abdeckfolie 49 weist eine ebene Oberseite 51 und eine dazu parallele Unterseite 52 auf, mit der sie beim Abdekken der Platte 2 auf deren Oberseite 5 zu liegen kommt. Die Abdeckfolie 49 hat eine zwischen der Oberseite 51 und der Unterseite 52 gemessene Stärke 53, die klein gegenüber den Querabmaßen der Abdeckfolie 49 ist. Die Abdeckfolie 49 ist bespw. aus einem Polycarbonat der Stärke 0,1 mm gefertigt.

Beim Auflegen auf die Platte 2 wird die Abdeckfolie 49 so ausgerichtet, daß die Durchgangslöcher 50 mit den Durchgangslöchern 9 fluchten. Auf diese Weise können die Abdeckfolie 49 und die Platte 2 in noch näher zu beschreibender Weise gleichzeitig miteinander verbunden und auf einer Trageeinrichtung befestigt werden.

Selbstverständlich können statt der Durchgangslöcher 50 bzw. der Durchgangslöcher 9 nach unten bzw. nach oben vorstehende zylindrische Zapfen vorgesehen sein, die beim Auflegen der Abdeckfolie 49 auf die Platte 2 in die Durchgangslöcher 9 bzw. die Durchgangslöcher 50 eingreifen und so die Abdeckfolie 49 lösbar mit der Platte 2 verbinden.

Das vorzugsweise verwendete Material für die Abdeckfolie 49 ist, wie bereits erwähnt, ein Polycarbonat der Stärke 0,1 mm. Diese Folie ist im für die verwendeten optischen Analysemethoden interessierenden Wellenlängenbereich durchsichtig und weist nur geringe Eigenfluoreszenz auf. Die optischen Analysemethoden können so auch von oben durch die Abdeckfolie 49 hindurch angewandt werden, insbesondere ist es möglich, im Durchstrahlverfahren durch die Abdeckfolie 49 und die Bodenwand 24 der Mulden hindurch die optische Dichte der in den Mulden 11 aufgenommenen Substanzen zu messen.

Bei den bevorzugten kleinen Volumina 33 der Mulden 11, die im Bereich zwischen 30 und 100 $\mu$l liegen, kann sich das Volumen von in den Mulden 11 aufgenommenen Lösungen durch Kondensations- und/oder Verdunstungseffekte verändern. Dies gilt insbesondere, wenn ein häufiges Umtemperieren der Lösungen zwischen hohen und tiefen Temperaturen erforderlich ist, wie es bei der Polymerase-Kettenreaktion (PCR) auftritt, einem häufig angewandten Verfahren zur Hochverstärkung einzelner Nukleinsäure-Stränge.

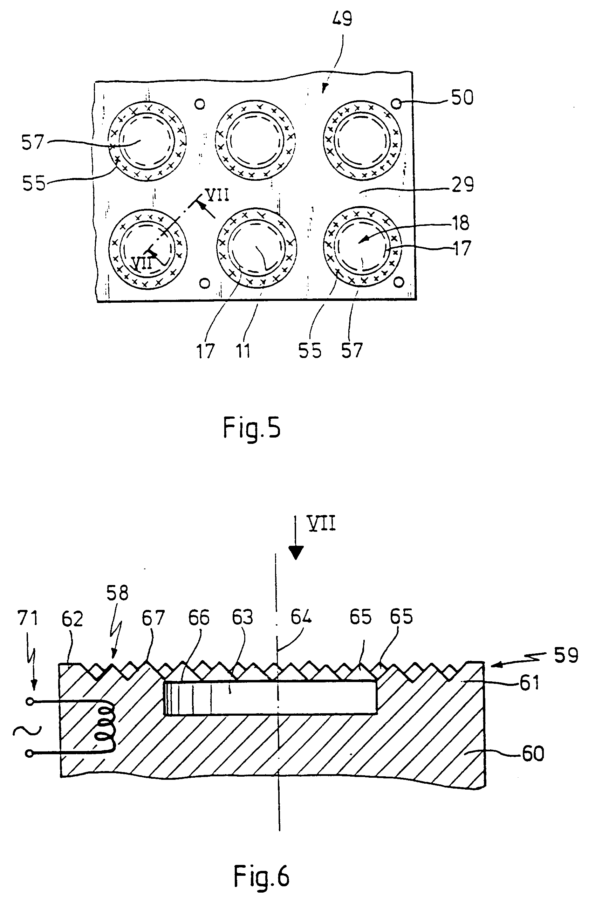

Um die Dichtwirkung der Abdeckfolie 49 zu erhöhen, wird die Abdeckfolie 49 im Bereich einer jeden Mulde 11 durch eine, den Öffnungsrand 17 der Mulde umgebende, geschlossene ringförmige Verbindungsnaht 55 mit der Platte 2 verbunden. In Fig. 5 ist zu erkennen, daß jede Verbindungsnaht 55 einen kreisförmigen Bereich 57 der Abdeckfolie 49 begrenzt, der jeweils die Öffnung 18 einer zugeordneten Mulde 11 abdeckt. Auf diese Weise ist jede Mulde 11 sozusagen mit einem eigenen Deckel in Form des kreisförmigen Bereiches 57 abgedeckt, der durch die Verbindungsnaht 55 so mit den die Mulde 11 umgebenden Stegen 29 verbunden ist, das jede Mulde 11 gegenüber der Atmosphäre und den anderen Mulden 11 gasdicht abgeschlossen ist.

Zum Anbringen der einzelnen Verbindungsnähte 55 dient bspw. ein an seiner Stirnseite 58 profilierter Schweißstempel 59, der in Fig. 6 im Ausschnitt dargestellt ist. Der Schweißstempel 59 weist einen vollzylindrischen Grundkörper 60 auf, der an seinem oberen Ende 61 einen mit dem Grundkörper 60 einstückigen ringförmigen Ansatz 62 trägt. Der ringförmige Ansatz 62 begrenzt eine kreisförmige Aussparung 63, die zu dem Grundkörper 60 und damit zu dessen Längsachse 64 konzentrisch ist, und trägt die von dem Grundkörper 60 wegweisende kranzförmige Stirnseite 58.

Auf der die Aussparung 63 kranzförmig umgebenden Stirnseite 58 ist eine Profilierung in Form von in Reihen angeordneten Pyramiden 65 vorgesehen, die an ihrer quadratischen Basis 66 einstückig mit dem ringförmigen Ansatz 62 ausgebildet sind. Die Pyramiden 65 weisen mit ihrer Spitze 67 in eine Richtung prallel zu der Längsachse 64 des Schweißstempels 59 von dem Grundkörper 60 weg.

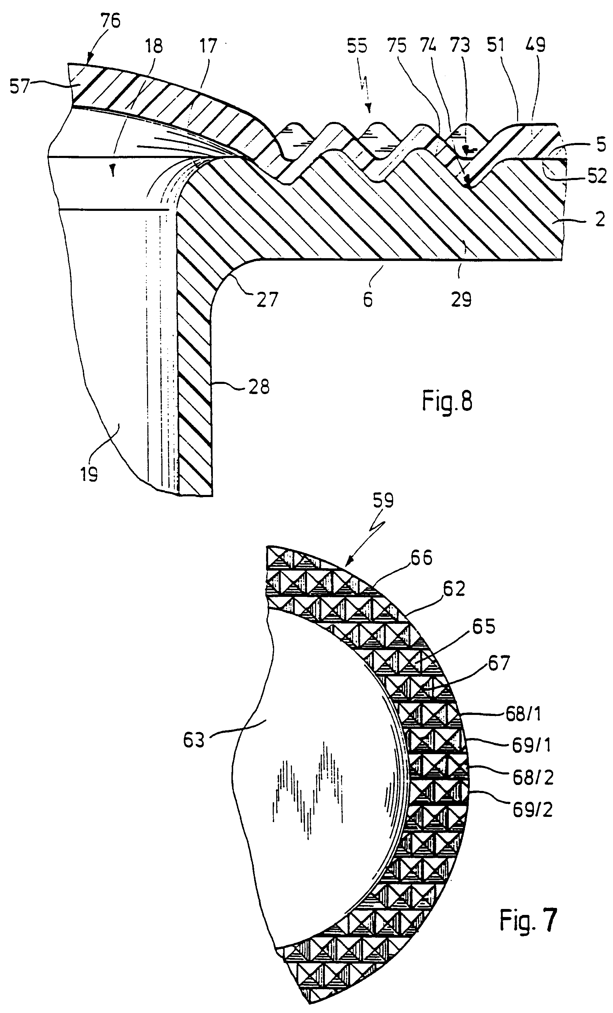

In Fig. 7 ist die Draufsicht auf die Stirnseite 58 in Richtung des Pfeiles VII aus Fig. 6 im Ausschnitt dargestellt. Wie zu erkennen ist, sind die Pyramiden 65 in Reihen 68 und 69 angeordnet, die gegeneinander um die halbe Breite der Pyramidenbasis 66 versetzt sind. Die Anordnung ist derart getroffen, daß zwischen zwei Reihen 68/1 und 68/2, die parallel zueinander verlaufen und gegeneinander nicht versetzt sind, eine Reihe 69/1 verläuft, die dementsprechend gegenüber den Reihen 68/1 und 68/2 um die halbe Breite der Pyramidenbasis 66 versetzt ist. An die Reihe 68/2 schließt sich von der Reihe 69/1 abgelegen unmittelbar eine Reihe 69/2 an, die parallel zu der Reihe 69/1 verläuft und seitlich zu dieser ausgerichtet ist.

Zurückkehrend zu Fig. 6 ist zu erkennen, daß der Schweißstempel 59 mit einer bei 71 schematisch angedeuteten Heizung versehen ist, durch die der Schweißstempel 59, der vorzugsweise aus V2A-Stahl gefertigt ist, auf ca. 280°C aufgeheizt wird. Zum Anbringen der Verbindungsnaht 55 wird der aufgeheizte Schweißstempel 59 von oben so auf die Oberseite 51 der auf die Platte 2 aufgelegten Abdeckfolie 49 gesetzt, daß er mit seiner profilierten, ringförmigen Stirnseite 58 zentrisch den Öffnungsrand 17 der unter der Abdeckfolie 49 liegenden und zu verschweißenden Mulde 11 umgibt. Die kreisförmige Aussparung 63 weist einen Durchmesser auf, der so groß ist, daß die Pyramidenspitzen 67 außerhalb des Öffnungsrandes 17 auf über den Stegen 29 befindlichen Abschnitten der Abdeckfolie 49 zu liegen kommen.

Die quadratische Basis 66 der Pyramiden 65 mißt 0,5 x 0,5 mm und die Spitze 67 der vierseitigen Pyramide 65 liegt 0,25 mm senkrecht oberhalb der Pyramidenbasis 66, d.h. zwei einander gegenüberliegende Pyramidenseiten schließen einen Scheitelwinkel von 90° ein. In radialer Richtung sind bis zu drei Pyramiden 65 hintereinander auf der ringförmigen Stirnfläche 58 angeordnet, so daß der Schweißstempel 59 insgesamt einen Außendurchmesser aufweist, der um mindestens 6 Basislängen einer Pyramide 65 größer ist als der Durchmesser der Aussparung 63.

Zum Verschweißen einer Abdeckfolie 49, deren Stärke 53 ca. 0,1 mm entspricht, mit einer Platte 2, deren Stärke 7 ca. 0,27 mm entspricht, hat sich folgendes Verfahren bewährt:

Die Abdeckfolie 49 wird von oben so auf die Platte 2 gelegt, daß sie die Mulden 11 abdeckt und daß die Durchgangslöcher 50 mit den Durchgangslöchern 9 fluchten. Der auf 280°C aufgeheizte Schweißstempel 59 wird mit seiner Stirnseite 58 zuvorderst von oben so auf die Oberseite 51 der Abdeckfolie 49 gesetzt, daß er sich zentrisch über einer unter der Abdeckfolie 49 befindlichen und zu verschweißenden Mulde 11 befindet. Die Pyramiden 65 auf der Stirnseite 58 liegen jetzt mit ihren Spitzen 67, die ggf. etwas in das Material der Abdeckfolie 49 eindringen, auf der Oberseite 51 auf und erhitzen diese. Die Abdeckfolie 49 wird auf diese Weise für ca. 13 Sekunden durch das wabenartige Profil der Stirnseite 58 vorgeheizt. Danach wird der Schweißstempel 59 um ca. 0,1 - 0,2 mm nach unten auf die Abdeckfolie 49 gedrückt, so daß jede Pyramide 67 in die Abdeckfolie 49 und diese wiederum in die Stege 29 der Platte 2 eindringt. In dieser Stellung verbleibt der Schweißstempel 59 für zwei Sekunden, dann wird er von der Abdeckfolie 49 vollständig abgehoben.

Die so entstandene Verbindungsnaht 55, die eine Art Schweißnaht ist, ist in Fig. 8 in einem Querschnitt entlang der Linie VIII-VIII aus Fig. 5 dargestellt. Die erkaltete Verbindungsnaht 55 weist eine entsprechende Profilierung auf wie der Schweißstempel 59. Die Pyramiden 65 haben in die vorgeheizte Oberseite 51 der Abdeckfolie 49 kopfstehende pyramidenartige Vertiefungen 73 eingedrückt, die von ihrer Form her den Pyramiden 65 entsprechen. Die Abdeckfolie 49 ist darüberhinaus im Bereich der Vertiefungen 73 mit ihrer Unterseite 52 in die indirekt durch die Abdeckfolie 49 hindurch vorgeheizte Oberseite 5 der Stege 29 eingedrungen und hat dort Vertiefungen 74 ausgebildet, die den Vertiefungen 73 entsprechen. Auf diese Weise hat sich zwischen der Unterseite 52 der Abdeckfolie 49 sowie der Oberseite 5 der Platte 2 eine Kontaktfläche 75 ausgebildet, die im Querschnitt zickzack-förmig verläuft. Durch diesen zickzack-förmigen Verlauf ist die Kontaktfläche 75 größer als die Auflagefläche, die vor dem Verschweißen zwischen der Unterseite 52 der Abdeckfolie 49 und der Oberseite 5 der Platte 2 im vorgesehenen Bereich der Verbindungsnaht 55 vorlag.

Durch die Hitzewirkung der Pyramiden 65 wurde nicht nur die Auflagefläche vergrößert, entlang der Kontaktfläche 75 sind die Abdeckfolie 49 und die Stege 29 außerdem miteinander stoffschlüssig verschweißt. Es hat sich gezeigt, daß diese Verbindungsnaht 55 auch bei häufigem Wechsel zwischen hohen und tiefen Temperaturen an der Unterseite 6 bzw. an der Außenseite 28 für einen guten nicht nur flüssigkeits- sondern auch gasdichten Abschluß der einzelnen Mulden 11 sorgt. Dies gilt auch dann noch, wenn sich im Inneren der Mulden ein Überdruck einstellt, weil beispielsweise die aufgenommenen Lösungen auf so hohe Temperaturen erwärmt bzw. erhitzt wurden, daß das über der Lösung befindliche Gasvolumen bestrebt ist, sich auszudehnen. Die Verbindungsnaht 55 hält auch den üblichen mechanischen Belastungen, denen die verschlossene Platte 2 im Laboralltag ausgesetzt ist, sowie den mit dem Umtemperieren verbundenen geringen Formänderungen und Spannungen problemlos stand.

Während des oben beschriebenen Verschweißens wölbt sich der die Öffnung 18 abdeckende kreisförmige Abschnitt 57 der Abdeckfolie 49 kuppelartig hoch, so daß eine verschlossene und wie oben beschrieben verschweißte Platte 2 über jeder Mulde 11 eine linsenförmige Wölbung 76 der Abdeckfolie 49 aufweist.

Da die Wölbung 76 jedoch nur bei gasdicht verschweißten Mulden 11 ausgebildet wird, ist sie zugleich eine optische Anzeige dafür, daß die ausgebildete Verbindungsnaht 55 für einen auch einem Überdruck im Inneren der Mulde standhaltenden gasdichten Abschluß der betreffenden Mulde 11 gesorgt hat. Weist die Abdeckfolie 49 nach dem Verschweißen keine Wölbungen 76 auf, so war beispielsweise der Schweißvorgang bezüglich der Verweilzeiten, der Temperatur des Schweißstempels 59 oder auch der Eindringtiefe der Pyramiden 65 in die Oberseite 51 fehlerbehaftet.

Die Temperatur des Schweißstempels 59, die Abmaße der Pyramiden 65 sowie die Eindringtiefe der Pyramiden 65 in die Oberseite 51 der Abdeckfolie 49 sind in dem aufgeführten Ausführungsbeispiel lediglich beispielhaft für eine Abdeckfolie aus Polycarbonat der Stärke 0,1 mm und eine Platte 2 aus Polycarbonat der Stärke 0,27 mm angegeben. Bei dickeren Polycarbonatfolien muß die Eindringtiefe der Pyramiden, die in etwa der Stärke der Abdeckfolie entspricht, an die neuen Stärken angepaßt werden.

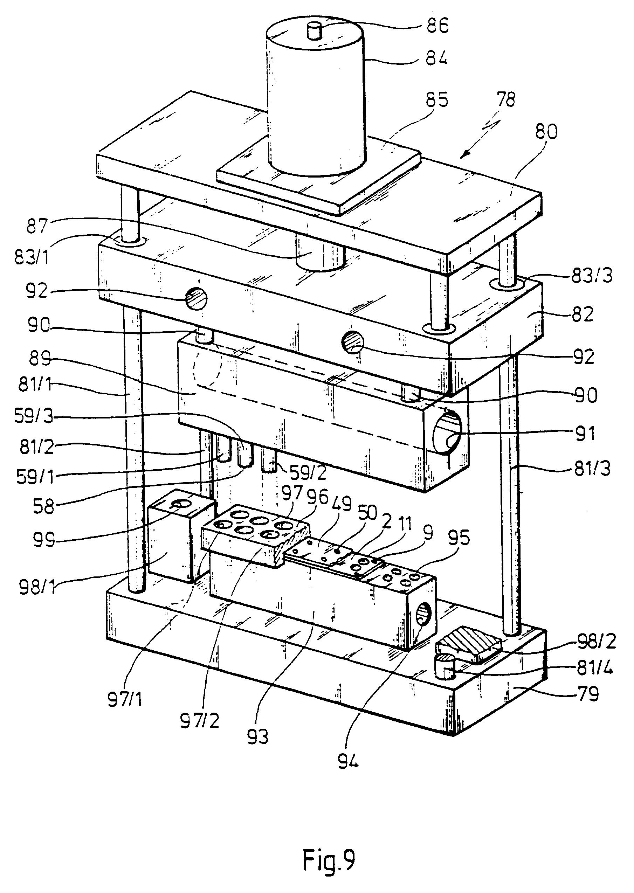

Wesentlich für den Erfolg des Schweißvorganges ist neben der korrekten Einhaltung der Verweildauer des Schweißstempels 49, zunächst auf der Oberseite 51 und dann im in die Oberseite eingedrungenen Zustand, auch die Tiefe, um die die Pyramiden 65 in das Material der Abdeckfolie 59 eindringen. Obgleich der oben beschriebene Schweißvorgang von Hand durchgeführt werden kann, wird die Ausbeute an korrekt gelegten Verbindungsnähten 55 durch die Verwendung einer in Fig. 9 dargestellten Verschweißeinrichtung 78 deutlich erhöht.

Die Verschweißeinrichtung 78 weist eine flache, rechteckige Grundplatte 79 sowie eine oberhalb der Grundplatte 79 angeordnete flache Kopfplatte 80 auf, die in etwa die gleichen Querabmaße zeigt wie die Grundplatte 79. Die Kopfplatte 80 ist mit Hilfe von vier Führungsstangen 81 auf der Grundplatte 79 befestigt. Von den vier Führungsstangen 81, die je im Bereich einer der vier Ecken von oben in die Grundplatte 79 eingeschraubt sind, ist die in Fig. 9 vordere rechte Führungsstange 81/4 aus Gründen einer übersichtlichen Darstellung herausgebrochen.

Zwischen der Grundplatte 79 und der Kopfplatte 80 ist eine höhenverstellbare Trägerplatte 82 vorgesehen, in deren äußeren Ecken Kugelbüchsen 83 eingelassen sind, durch die die Führungsstangen 81 hindurchgehen. Als Antrieb für die Höhenverstellung der Trägerplatte 82 ist ein elektrisch betriebener Antriebsmotor 84 von der Trägerplatte 82 abgelegen mit seinem Flansch 85 von oben auf der Kopfplatte 80 befestigt. Der Motor 84 weist eine bei 86 angedeutete Motorwelle auf, die mit einem bei 87 angedeuteten Kugelumlaufspindeltrieb verbunden ist. Der Kugelumlaufspindeltrieb 87 ist andererseits mit der Trägerplatte 82 verbunden und dient zur Umsetzung der Drehbewegung der Motorwelle 86 in die Verstellbewegung der Trägerplatte 82 längs der Führungsstangen 81.

Von dem Kugelumlaufspindeltrieb 87 abgelegen ist mittig unterhalb der Trägerplatte 82 ein Heizblock 89 vorgesehen, der über vier Abstandsbolzen 90 von unten an der Trägerplatte 82 befestigt ist. Der aus Kupfer gefertigte Heizblock 89 erfüllt die Funktion der in Fig. 6 bei 71 angedeuteten Heizung für die Schweißstempel 59, von denen in Fig. 9 drei angedeutet sind. Die Schweißstempel 59/1, 59/2 und 59/3 stecken von den Abstandsbolzen 90 abgelegen von unten in dem Heizblock 89 und zeigen mit ihren Stirnseiten 58 von dem Heizblock 89 wegweisend nach unten.

In dem Heizblock 89 ist ein ihn in Fig. 9 von rechts nach links fast vollständig durchsetzendes Sackloch 91 vorgesehen, in das eine elektrisch beheizbare Heizpatrone gesteckt ist, die aus Gründen der Übersichtlichkeit nicht weiter dargestellt ist. Die Temperatur des Heizblockes 89 wird in geeigneter Weise von einem nicht weiter gezeigten Temperaturfühler gemessen und an eine ebenfalls nicht dargestellte Regelschaltung gegeben, die ihrerseits die Heizpatrone ansteuert. In an sich bekannter Weise wird so ein geschlossener Regelkreis gebildet, über den die Temperatur des Heizblockes 89 auf einem konstanten Wert, bspw.

280 °C, gehalten wird. Über die Abstandsbolzen 90 erwärmt der Heizblock 89 die Trägerplatte 82, was zu einem Verklemmen der Kugelbuchsen 83 auf den Führungsstangen 81 führen kann. Aus diesem Grund sind in der Trägerplatte 82 Kühlmittelbohrungen 92 vorgesehen, über die die Trägerplatte 82 an einen Thermostatkühlkreislauf angeschlossen ist. Auf diese Weise ist die Temperatur der Trägerplatte 82 unabhängig von der Temperatur des Heizblockes 89 über einen externen Thermostaten regelbar, so daß eine leichtgängige Verstellung der Trägerplatte 82 längs der Führungsstangen 81 gewährleistet ist.

Etwa mittig unter dem über die Trägerplatte 82 höhenverstellbaren Heizblock 89 ist auf der Grundplatte 79 ein nach oben weisender Aufnahmeblock 93 vorgesehen. Der Aufnahmeblock 93 weist eine ihn durchsetzende Kühlmittelbohrung 94 auf, die in gleicher Weise wie die Kühlmittelbohrung 92 der Trägerplatte 82 an einen externen Thermostatkreislauf angeschlossen ist, der den Aufnahmeblock 93 auf einer konstanten und einstellbaren Temperatur hält.

Der Aufnahmeblock 93 weist nach oben offene Näpfe 95 auf, die zur Aufnahme der nach unten über die Platte 2 vorstehenden Ausstülpungen 21 ausgelegt sind. Die Näpfe 95 haben daher dieselben Abmaße wie die in Fig. 3 zu erkennenden Sacklöcher 38 in dem Formblock 37 und sind wie die Mulden 11 in Reihen 12 und Spalten 13 angeordnet.

Von oben ist auf den Aufnahmeblock 93 eine Platte 2 aufgelegt, die wiederum von einer Abdeckfolie 49 abgedeckt ist. Über die Abdeckfolie 49 ist eine den Aufnahmeblock 93 allseits von oben übergreifende Lochmaske 96 gestülpt, die die Abdeckfolie 49 auf die Platte 2 und diese wiederum mit ihren Mulden 11 in den Aufnahmeblock 93 drückt. In der Lochmaske 96 sind auf die Schweißstempel 59 ausgerichtete durchgehende Löcher 97 vorgesehen, die ebenfalls derart in Reihen 12 und Spalten 13 angeordnet sind, daß über jeder Mulde 11 zentrisch ein Loch 97 ausgerichtet ist. Aus Gründen der Übersichtlichkeit sind die Lochmaske 96, die Abdeckfolie 49 sowie die Platte 2 gegenüber dem Aufnahmeblock 93 versetzt abgebrochen dargestellt.

Selbstverständlich ist für jede Mulde 11 der Platte 2 ein Loch 97 und ein Schweißstempel 59 vorgesehen.

Beidseits des Aufnahmeblockes 93 sind zur Befestigung der Lochmaske 96 auf der Grundplatte 79 zwei identische nach oben weisende Sockel 98 angeordnet, von denen der rechte Sockel 98/2 abgebrochen dargestellt ist. Der Sockel 98/1 weist eine nach oben zeigende Befestigungsbohrung 99 auf, an der eine Befestigungsklammer, die beispielsweise als Federklammer oder als Riegel ausgelegt sein kann, befestigt wird, um die Lochmaske 96 nach unten auf den Aufnahmeblock 93 zu drükken.

Aus Gründen der Übersichtlichkeit ist die Befestigungsklammer in Fig. 9 weggelassen.

Die insoweit beschriebene Verschweißeinrichtung 78 arbeitet wie folgt:

Die Trägerplatte 82 befindet sich in der in Fig. 9 gezeigten hochgefahrenen Ausgangsposition. Nachdem die Lochmaske 96 von dem Aufnahmeblock 93 entfernt wurde, wird eine zu verschweißende Platte 2 von oben so auf den Aufnahmeblock 93 gelegt, daß die Mulden 11 mit ihren Ausstülpungen 21 in den Näpfen 95 zu liegen kommen. Die mit ihrer Öffnung 18 nach oben weisenden Mulden 11 sind bereits mit den gewünschten Substanzen gefüllt und von einer Abdeckfolie 49 bedeckt, oder werden jetzt entsprechend gefüllt und dann mit einer Abdeckfolie 49 abgedeckt, die so ausgerichtet ist, daß ihre Durchgangslöcher 50 mit den Durchgangslöchern 9 in der Platte 2 fluchten. Über die so abgedeckte Platte 2 wird die Lochmaske 96 gestülpt, wobei ihre durchgehenden Löcher 97 zentrisch über den Mulden 11 zu liegen kommen. Mit Hilfe der an den Sockeln 98 vorgesehenen Befestigungsklammern wird die Lochmaske 96 fest nach unten auf den Aufnahmeblock 93 gedrückt.

Der Heizblock 89 ist über die in dem Sackloch 91 steckende Heizpatrone auf 280° C aufgeheizt. Diese Temperatur weisen auch die mit dem Heizblock 89 thermisch leitend verbundenen Schweißstempel 59 auf. Über den Kugelumlaufspindeltrieb 87 wird die Rotationsbewegung der Motorwelle 86 des Antriebsmotors 84 in eine über die Kugelbüchsen 83 und die Führungsstangen 81 geführte abwärts gerichtete Bewegung der Trägerplatte 82 umgesetzt. Beim Heruntergehen der Trägerplatte 82 und damit des Heizblockes 89 schieben sich die Schweißstempel 59/1 bzw. 59/2 von oben in die zugeordneten Löcher 97/1 bzw. 97/2 der Lochmaske 96. Die Übersetzung des Kugelumlaufspindeltriebes 87 und die Anzahl der Umdrehungen der Motorwelle 86 sind so bemessen, daß am Ende der Abwärtsbewegung der Trägerplatte 82 die Schweißstempel 59 mit ihrer Stirnseite 58 bzw. den Spitzen 67 der Pyramiden 65 gerade auf der Oberseite 51 der Abdeckfolie 49 zu liegen kommen, wie dies oben bereits beschrieben wurde.

In dieser Stellung, in der die Schweißstempel 59 die Abdeckfolie 49 und die Platte 2 im Bereich der anzulegenden Verbindungsnähte 55 vorheizen, verharrt die Verschweißeinrichtung 78 für ca. 13 Sekunden. Nach dieser Vorwärmzeit wird die Trägerplatte 82 über den Kugelumlaufspindeltrieb 87 von dem Motor 84 allmählich um 0,1 mm weiter nach unten auf den Aufnahmeblock 93 zubewegt, so daß die Pyramiden 65 auf der Stirnseite 58 der Schweißstempel 59 in die Abdeckfolie 49 und diese in die Stege 29 der Trägerplatte 2 eindringen. Nach weiteren zwei Sekunden wird der Motor 84 so angesteuert, daß sich seine Motorwelle 86 in zur vorherigen Drehrichtung entgegengesetzten Richtung dreht und damit über den Kugelumlaufspindeltrieb 87 die Trägerplatte 82 und damit den Heizblock 89 und die Schweißstempel 59 wieder in die in Fig. 9 gezeigte Ausgangsposition hochfährt.

Nach dem Lösen der Befestigungsklammern kann die Lochmaske 96 abgenommen werden und die wie in Fig. 5 dargestellte verschweißte Platte 2 wird von dem Aufnahmeblock 93 abgenommen.

Jetzt wird die nächste Platte 2 auf den Aufnahmeblock 93 gelegt und der Schweißvorgang beginnt von vorne.

Für viele Versuche ist es erforderlich, die in den Mulden 11 aufgenommenen Substanzen bei niedrigen Temperaturen zu halten und zu verhindern, daß sie während des soeben beschriebenen Schweißvorganges aufgeheizt werden. Zu diesem Zweck wird der Aufnahmeblock 93 und damit seine Näpfe 95 über die Kühlmittelbohrung 94 auf eine Temperatur thermostatiert, wie sie die jeweiligen Substanzen erfordern, bspw. auf 10° C. Die Mulden 11 liegen mit ihrer Wärmeaustauschfläche 28' eng an der Innenwand des jeweiligen Napfes 95 an, so daß wegen der geringen Stärke 31 der Wandung 20 der Mulden 11 die in den Mulden 11 befindlichen Substanzen auf derselben Temperatur gehalten werden wie der Aufnahmeblock 93 selbst. Die den Substanzen beim Verschweißen evtl. zugeführte Wärme wird wegen des guten Wärmeüberganges augenblicklich durch die Wandung 20 hindurch in den Aufnahmeblock 93 abgeführt.

Auf diese Weise können in den Mulden 11 der neuen Platte 2 mit Hilfe der neuen Verschweißeinrichtung 78 auch Substanzen eingeschweißt werden, die sehr empfindlich auf Temperaturschwankungen reagieren. Hierdurch ist es in bisher nicht gekanntem Maße möglich, temperatursensitive Substanzen oder Lösungen bzw. hochinfektiöse Substanzen in großer Zahl auf kleinstem Raum gasdicht zu verpacken. Die Substanzen können bspw. vorbereitete Reaktionslösungen für biochemische und/oder mikrobiologische Testverfahren sein, die dem Anwender bereits in portionierter und verschweißter Form in den neuen Platten 2 geliefert werden. Die von dem Anwender zu untersuchenden Substanzen können bspw. in die in den Mulden 11 befindlichen Testlösungen eingebracht werden, indem die die Öffnungen 18 der Mulden 11 abdeckenden Wölbungen 76 von oben mit einer dünnen Kanüle durchstochen werden. Die zu untersuchenden Substanzen werden dann in die in den Mulden 11 befindlichen Testlösungen eingespritzt.

Nach dem Zurückziehen der Kanüle, die bspw. eine im Laboralltag üblicherweise verwendete Spritze ist, verbleibt in der Wölbung 76 ein kapillarartiger Kanal. Über diesen Kanal ist kein Feuchtigkeitsaustausch mit der umgebenden Atmosphäre möglich, so daß sich das Volumen der in den gasdicht verschweißten Mulden 11 aufgenommenen Substanzen oder Lösungen durch Kondensations- oder Verdunstungseffekte nicht verändert.

Üblicherweise werden die Mulden 11 der neuen Platte 2 jedoch vor Ort, bspw. im Chemielabor, gefüllt und unter Verwendung der neuen Verschweißeinrichtung mit einer Abdeckfolie 49 gasdicht verschlossen. Das feste Rastermaß der Spalten 13 und Reihen 12 ermöglicht es dabei, mehrere Mulden 11 gleichzeitig mit einer an sich bekannten Mehrfachpipette zu füllen.

In Fig. 10 ist eine Platte 2 mit gasdicht verschlossenen Mulden 11 gezeigt, in denen sich bspw. Lösungen befinden, deren Reaktionsverlauf über ihre Temperatur beeinflußbar ist. Die Lösungen sind entweder vor Ort in die Mulden 11 eingefüllt worden oder befanden sich bereits in der verschweißt gelieferten Platte 2 und wurden nachträglich vom Anwender mit den zu untersuchenden Substanzen - bspw. zu untersuchenden DNA-Molekülen - angeimpft.

Die so vorbereitete Platte 2 wird von oben in einen Thermoblock 101 eingesetzt, der nach oben offene Sacklöcher 102 aufweist, die zur Aufnahme der becherartigen Ausstülpungen 21 dienen. Die Sacklöcher 102 haben dieselbe Form wie die Sacklöcher 38 in dem zur Herstellung der Platte 2 verwendeten Formblock 37. Nach dem Einsetzen der Ausstülpungen 21 in die Sacklöcher 102 liegen diese mit ihrer Innenwand 103 unmittelbar an der Wärmeübergangsfläche 28' der Ausstülpungen 21 an. Zwischen der Außenseite 28 und der als Gegenfläche 103' wirkenden Innenwand 103 befinden sich deshalb keine den Wärmeübergang zwischen dem Thermoblock 101 und dem Inneren 19 der Mulden 11 störende Luftschichten.

In dem Thermoblock sind weiterhin nach oben offene Gewindebohrungen 104 vorgesehen, die bei in den Thermoblock 101 eingesetzter Platte 2 mit den Durchgangslöchern 50 bzw. 9 in der Abdeckfolie 49 bzw. in der Platte 2 fluchten. Durch die Durchgangslöcher 50 und 9 hindurch werden von oben Schrauben 105 in die Gewindebohrungen 104 eingeschraubt und damit die mit der Abdeckfolie 49 verschlossene Platte 2 fest mit dem Thermoblock 101 verbunden. Der Thermoblock 101 kommt mit seiner Oberseite 106 dicht an der Unterseite 6 der Platte 2 zu liegen, und die Ausstülpungen 21 werden mit ihrer Wärmeaustauschfläche 28' fest auf die Innenwand 103 der Sacklöcher 102 gedrückt.

Wegen der glatten Oberfläche der Außenseite 28, die in unmittelbarem thermischen Kontakt mit der Innenwand 103 steht, und wegen des beschriebenen großen Wärmedurchtrittswertes nehmen die in den Mulden 11 befindlichen Lösungen innerhalb weniger Sekunden die Temperatur des Thermoblocks 101 an. Sollen die Lösungen bspw. für eine längere Zeit bei einer tiefen Temperatur gelagert werden, wird der Thermoblock 101, der aus einem gut wärmeleitenden Metall gefertigt ist, über einen an ihn angeschlossenen Thermostaten z.B. auf + 4 °C temperiert.

Wenn die Reaktion in den Lösungen gestartet werden soll, wird der Thermoblock 101 in geeigneter Weise auf die Reaktionstemperatur der Lösungen aufgeheizt, die wegen des guten Wärmeüberganges nahezu unmittelbar der Temperaturänderung des Thermoblocks 101 folgen. Die Temperaturänderung des Thermoblocks 101 selbst kann in an sich bekannter Weise dadurch bewirkt werden, daß der Thermoblock 101 in Wasserbäder verschiedener Temperatur eingetaucht wird, in wärmeleitenden Kontakt mit vortemperierten weiteren Metallblöcken gebracht wird oder längs einer Metallschiene bewegt wird, auf der ein Temperaturgradient etabliert ist.

Insbesondere die Metallschiene mit dem Temperaturgradienten ermöglicht das zyklische Verändern der Temperatur des Thermoblockes 101 und damit der Temperatur der Lösungen in den Mulden 11. Zum Durchführen der Polymerase-Kettenreaktion in den Mulden 11 wird der Thermoblock 101 bspw. zunächst für 60 Sekunden auf 37 °C, dann für 120 Sekunden auf 72 °C, danach für 60 Sekunden auf 94 °C und dann wieder für 60 Sekunden auf 37 °C gehalten u.s.w.. Wegen des auch bei Überdruck gasdichten Abschlusses der einzelnen Mulden entweicht auch bei den hohen Temperaturen keine dann wasserdampfgesättigte Luft aus dem Inneren der Mulden. Der Wasserdampfgehalt des über der aufgenommenen Flüssigkeit befindlichen Luftvolumens wird zwar durch die Flüssigkeit geregelt, da jedoch keine Luft entweichen kann, kommt es nicht zu Verdunstungsvorgängen, so daß sich die anfänglich eingestellten Konzentrationen in den Lösungen im Verlauf der vielen Temperaturzyklen nicht verändern. Dies sorgt für eine gute Ausbeute bei den Experimenten.

Entscheidend für den Verlauf der Polymerase-Kettenreaktion ist die Zeit, die benötigt wird, um die Lösungen auf die einzelnen Temperaturen zu bringen. Während ein typischer Reaktionsablauf in den bekannten Plastik-Reaktionsgefäßen mehr als 10 Stunden dauert und üblicherweise übernacht durchgeführt wird, ist die Reaktion bei Verwendung der neuen Platte 2 in weniger als 4 Stunden beendet. Ein solcher Versuch kann daher jetzt innerhalb eines Tages vorbereitet, durchgeführt und analysiert werden.

Nach Beendigung des Versuchsablaufes werden die Lösungen zumindest teilweise weiterverwendet, bspw. um sie über ein Trenngel zu analysieren. Zu diesem Zweck wird die Wölbung 76 mit der in Fig. 10 bei 107 angedeuteten Spritze durchstochen und ein Teil der Lösung entnommen. Nach dem Zurückziehen der Spritze 107 kann die in der Mulde 11 verbleibende Lösung bspw. in der oben beschriebenen Weise gelagert werden. Obwohl das bei der Entnahme in der Wölbung 76 entstandene Loch keinen nennenswerten Feuchtigkeitsaustausch zu Folge hat, läßt es sich bespw. mit einer Adhäsionsfolie nachträglich wieder verschließen.

Abschließlich sei lediglich der Vollständigkeit halber erwähnt, daß die Querabmaße der neuen Platte 2 sowie die Reihen- und Spaltenabstände 14 bzw. 15 im wesentlichen von dem jeweils gewünschten Füllvolumen 33 der Mulden 11 abhängt. An diese Abstände sind die jeweils verwendeten Thermoblöcke 101, Aufnahmeblöcke 93 sowie Formblöcke 37 angepaßt. In jedem Fall ist jedoch die Stärke 7 der Folie 36 so gewählt, daß die Mulden 11 in der fertigen Platte 2 eine Bodenwand 24 aufweisen, deren Stärke 31 im Bereich von 0,04 mm liegt, so daß der Wärmedurchtrittswert den erforderlichen hohen Wert aufweist.

**Patentansprüche**

1. Verfahren zum Verschließen wenigstens einer Mulde (11) aus einer Anzahl von mit ihren Öffnungen (18) nach oben weisenden Mulden (11), die in einer Platte (2) vorgesehen sind und zur Aufnahme von chemischen und/oder biochemischen und/oder mikrobiologischen Substanzen dienen, wobei die Platte (2) thermisch verformbar ist und die Öffnungen (18) in ihrer Oberseite (5) münden, mit den Schritten:
   a) Auflegen einer thermisch verformbaren Abdeckplatte (49) auf die Oberseite (5) der Platte (2), wobei zumindest die Öffnung (18) der wenigstens einen zu verschließenden Mulde (11) von einem Bereich (57) der mit ihrer Oberseite (51) nach oben weisenden Abdeckplatte (49) abgedeckt wird, und danach
   b) Anbringen einer zumindest um die Öffnung (18) der zu verschließenden Mulde (11) herumlaufenden Verbindungsnaht (55), die zumindest den die Öffnung (18) der zu verschließenden Mulde (11) abdeckenden Bereich (57) mit der Platte (2) verbindet, dadurch gekennzeichnet, daß die Verbindungsnaht (55) zur Vergrößerung der Kontaktfläche (75) zwischen der Oberseite (5) der Platte (2) und der Abdeckplatte (49) im Querschnitt profiliert ausgeführt wird, wobei das Material der Abdeckplatte (49) teilweise in die Oberseite (5) der Platte (2) eindringt.

2. Verfahren nach Anspruch 1, dadurch gekennzeichnet, daß das Anbringen der Verbindungsnaht (55) das Anbringen einer in sich geschlossenen Verbindungsnaht (55) umfaßt.

3. Verfahren nach einem der vorhergehenden Ansprüche, dadurch gekennzeichnet, daß das Anbringen der Verbindungsnaht (55) das Herstellen einer zumindest abschnittsweise formschlüssigen Verbindung zwischen der Platte (2) und der Abdeckplatte (49) umfaßt.

4. Verfahren nach einem der vorhergehenden Ansprüche, dadurch gekennzeichnet, daß für jede Mulde (11) eine eigene Verbindungsnaht (55) angebracht wird.

5. Verfahren nach Anspruch 2, dadurch gekennzeichnet, daß die Verbindungsnaht (55) die Mulde (11) gasdicht abschließt.

6. Verfahren nach den Ansprüchen 3 bis 5, dadurch gekennzeichnet, daß das Anbringen der Verbindungsnaht (55) die Schritte umfaßt:
   bb) Aufsetzen eines an seiner Stirnseite (58) vorstehende profilierte Bereiche aufweisenden Schweißstempels (59) mit der Stirnseite (58) auf die Oberseite (51) der Abdeckplatte, wobei die profilierten Bereiche um den die Öffnung (18) abdeckenden Bereich (57) herum mit der Oberseite (51) in Kontakt gelangen; danach
   bd) Herunterdrücken des Schweißstempels (59) um eine festgelegte Wegstrecke, so daß die profilierten Bereiche zumindest in die Abdeckplatte (49) eindringen; und danach
   c) Entfernen des Schweißstempels (59) von der Abdeckplatte (49).

7. Verfahren nach Anspruch 6, dadurch gekennzeichnet, daß
   ba) vor dem Aufsetzen des Schweißstempels (59) zumindest dessen Stirnseite (58) auf eine Temperatur in der Nähe der Schmelzpunkttemperatur zumindest der Abdeckplatte (49) aufgeheizt wird, daß
   bc) nach dem Aufsetzen der Stirnseite (58) des Schweißstempels (59) der Schweißstempel (59) für eine festgelegte erste Zeitspanne in dieser Stellung belassen wird, und daß
   be) nach dem Herunterdrücken des Schweißstempels (59) in die Abdeckplatte (49) der Schweißstempel (59) für eine festgelegte zweite Zeitspanne in dieser Stellung belassen wird.

8. Verfahren nach einem der vorhergehenden Ansprüche, dadurch gekennzeichnet, daß die Platte (2) vor dem Anbringen der Verbindungsnaht (55) auf eine Aufnahmeeinrichtung gelegt wird.

9. Verfahren nach Anspruch 8, dadurch gekennzeichnet, daß die Aufnahmeeinrichtung auf einer festgelegten Temperatur gehalten wird und daß die Mulden (11) beim Auflegen auf die Aufnahmeeinrichtung mit dieser in thermischen Kontakt gebracht werden.

10. Verfahren nach Anspruch 9, dadurch gekennzeichnet, daß vor dem Aufsetzen der Schweißstempel (59) eine Haltevorrichtung von oben auf die Abdeckplatte (49) aufgelegt wird, die die Abdeckplatte (49) auf die Oberseite (5) der Platte (2) drückt und die Mulden (11) in thermischen Kontakt mit der Aufnahmeeinrichtung bringt.

11. Verfahren nach den Ansprüchen 7 und 10, dadurch gekennzeichnet, daß die Platte (2) aus einer dünnen Polycarbonatfolie (36) mit einer Stärke (7) geringer als 0,5 mm gefertigt ist, daß die Abdeckplatte (49) aus einer dünnen Polycarbonatfolie mit einer Stärke geringer als 0,3 mm gefertigt ist, daß die Mulden (11) eine Wand (20) mit einer Stärke (32) dünner als 0,08 mm und ein Volumen kleiner als 200 mm³ aufweisen, daß die festgelegte Wegstrecke etwa gleich der Stärke der Abdeckplatte (49) ist, daß die erste Zeitspanne zwischen 5 und 20 Sekunden beträgt, daß die zweite Zeitspanne zwischen 1 und 5 Sekunden beträgt und daß die Temperatur des Schweißstempels (59) zwischen 250°C und 300°C liegt.

12. Vorrichtung zum Verschließen wenigstens einer Mulde (11) aus einer Anzahl von mit ihren Öffnungen (18) nach oben weisenden Mulden (11), die in einer Platte (2) vorgesehen sind und zur Aufnahme von chemischen und/oder biochemischen und/oder mikrobiologischen Substanzen dienen, wobei die Platte (2) thermisch verformbar ist und die Öffnungen (18) in deren Oberseite (5) münden, mit einer Aufnahmeeinrichtung zur Aufnahme der ggf. von einer Abdeckplatte abgedeckten Platte (2), mit einer Schweißeinrichtung zum Verbinden der Abdeckplatte (49) mit der Platte (2) und mit einer Zustelleinrichtung für die Schweißeinrichtung, über die die Schweißeinrichtung mit der die Mulden (11) abdeckenden Abdeckplatte (49) in Kontakt bringbar ist, wobei die Schweißeinrichtung zumindest einen an seiner Stirnseite (58) vorstehende profilierte Bereiche aufweisenden Schweißstempel (59) umfaßt und die Stirnseite (58) des Schweißstempels (59) der Aufnahmeeinrichtung zugekehrt ist, dadurch gekennzeichnet, daß die vorstehenden profilierten Bereiche kranzförmig angeordnete Pyramiden (65) aufweisen, die an ihrer Basis (66) einstückig mit dem Schweißstempel (59) ausgebildet sind sowie mit ihren Spitzen (67) von dem Schweißstempel (59) weg weisen, daß die Pyramiden (65) zwischen sich eine Aussparung (63) begrenzen, die einen größeren Querschnitt aufweisen als die Öffnungen (18) der Mulden (11) und daß die Pyramiden (65) in gegeneinander versetzten Reihen (68, 69) angeordnet sind und eine zwischen ihrer Basis (66) und ihrer Spitze (65) gemessene Höhe aufweisen, die größer ist als die Stärke der Abdeckplatte (49).

13. Vorrichtung nach Anspruch 12, dadurch gekennzeichnet, daß für jede zu verschließende Mulde (11) ein Schweißstempel (59) vorgesehen ist.

14. Vorrichtung nach Anspruch 12, dadurch gekennzeichnet, daß für den zumindest einen Schweißstempel (59) eine Heizvorrichtung vorgesehen ist.

15. Vorrichtung nach den Ansprüchen 13 und 14, dadurch gekennzeichnet, daß als Heizvorrichtung ein Heizblock aus Metall, vorzugsweise aus Kupfer, vorgesehen ist, mit dem die Stempel in thermischem Kontakt stehen und in den die Stempel (59) von unten eingesetzt sind.

16. Vorrichtung nach Anspruch 12, dadurch gekennzeichnet, daß eine auf die Aufnahmeeinrichtung aufsetzbare Haltevorrichtung für die Platte (2) vorgesehen ist.

17. Vorrichtung nach den Ansprüchen 13 und 16, dadurch gekennzeichnet, daß die Haltevorrichtung eine Lochmaske (96) ist, in der für jeden Stempel (59) ein durchgehendes Loch (97) vorgesehen ist, das bei zwischen der Aufnahmeeinrichtung und der Lochmaske (96) angeordneter Platte (2) mittig und in Längsrichtung zu einer zu verschließenden Mulde (11) ausgerichtet ist.

18. Vorrichtung nach Anspruch 12, dadurch gekennzeichnet, daß die Zustellmittel einen elektrisch steuerbaren Motor (84) aufweisen.

19. Vorrichtung nach Anspruch 12, dadurch gekennzeichnet, daß für die Aufnahmeeinrichtung eine Kühleinrichtung vorgesehen ist.

**20.** Vorrichtung nach Anspruch 19, dadurch gekennzeichnet, daß an der Aufnahmeeinrichtung eine Negativform der Mulden angeordnet ist, die mit den Mulden (11), die nach unten unter die Platte (2) vorstehende Ausstülpungen (21) aufweisen, in Eingriff bringbar ist.

**21.** Vorrichtung nach den Ansprüchen 15, 17, 18 und 20, dadurch gekennzeichnet, daß sie eine Grundplatte (79) aufweist, auf der als Haltevorrichtung ein Aufnahmeblock (93) mit Näpfen (95) als Negativform angeordnet ist, daß oberhalb der Grundplatte (79) eine den Motor (84) tragende Kopfplatte (80) angeordnet ist, die über Führungsstangen (81) mit der Grundplatte (79) verbunden ist, daß zwischen der Grundplatte (79) und der Kopfplatte (80) eine von den Führungsstangen (81) geführte Trägerplatte (82) angeordnet ist, die über Getriebemittel mit dem Motor (84) verbunden ist und an der der Heizblock (89) nach unten weisend angeordnet ist, und daß für die Trägerplatte (82) eine Kühlvorrichtung vorgesehen ist.

**Claims**

**1.** A process for sealing at least one well (11) out of a number of wells (11) which have their openings (18) facing upwards and are provided in a plate (2) and serve to receive chemical and/or biochemical and/or microbiological substances, the plate (2) being deformable by the action of heat and the openings (18) having their orifices in the upper side (5) of said plate, wherein the process comprises the steps of

a) placing a coverplate (49), which is deformable by the action of heat, on the upper side (5) of the plate (2), at least the opening (18) of the at least one well (11) to be sealed being covered by an area (57) of the coverplate (49), which has its upper side (51) facing upwards, and then

b) providing a joining seam (55) which runs at least around the opening (18) of the well (11) to be sealed and joins at least the area (57), covering the opening (18) of the well (11) to be sealed, with the plate (2);

characterized in that the joining seam (55) is produced with a profiled cross-section in order to increase the contact surface (75) between the upper side (5) of the plate (2) and the coverplate (49), whereby the material of the coverplate (49) partially penetrates into the upper side (5) of the plate (2).

**2.** The process of claim 1, characterized in that the provision of the joining seam (55) comprises the provision of a joining seam (55) which is closed in itself.

**3.** The process of one of the preceding claims, characterized in that the provision of the joining seam (55) comprises the production of a join which is positive-locking, at least in sections, between the plate (2) and the coverplate (49).

**4.** The process of one of the preceding claims, characterized in that an individual joining seam (55) is provided for each well (11).

**5.** The process of claim 2, characterized in that the joining seam (55) seals the well (11) gas-tight.

**6.** The process of one of claims 3 to 5, characterized in that the provision of the joining seam (55) comprises the steps of

bb) placing a welding die (59), which has projecting profiled regions on its front face (58), with the front face (58) on the upper side (51) of the coverplate, the profiled regions coming into contact with the upper side (51) around the area (57) covering the opening (18); then

bd) pressing down the welding die (59) through a fixed path, so that the profiled regions at least penetrate into the coverplate (49); and then

c) removing the welding die (59) from the coverplate (49).

**7.** The process of claim 6, characterized in that

ba) before the welding die (59) is placed in position, at least its front face (58) is heated to a temperature which is in the region of the melting point of, at least, the cover plate (49), wherein

bc) after the front face (58) of the welding die (59) has been placed in position, the welding die (59) is left in this position for a fixed first period, and

be) after pressing down the welding die (59) into the coverplate (49), the welding die (59) is left in this position for a fixed second period.

**8.** The process of one of the preceding claims, characterized in that the plate (2) is placed on a receiving device before the joining seam (55) is produced.

**9.** The process of claim 8, characterized in that the receiving device is kept at a fixed temperature and the wells (11) are brought into thermal contact with the receiving device when they are placed on the latter.

10. The process of claim 9, characterized in that a holding device is placed from above onto the coverplate (49) before the welding die (59) is placed in position, which holding device presses the coverplate (49) onto the upper side (5) of the plate (2) and brings the wells (11) into thermal contact with the receiving device.

11. The process of claims 7 and 10, characterized in that the plate (2) is produced from a thin polycarbonate film (36) having a thickness (7) of less than 0.5 mm, the coverplate (49) is produced from a thin polycarbonate film having a thickness of less than 0.3 mm, the wells (11) have a wall (20) with a thickness (32) of less than 0.08 mm and a volume smaller than 200 mm$^3$, the fixed path is approximately equal to the thickness of the coverplate (49), the first period is between 5 and 20 seconds, wherein the second period is between 1 and 5 seconds and the temperature of the welding die (59) is between 250°C and 300°C.

12. An installation for sealing at least one well (11) out of a number of wells (11) which have their openings (18) facing upwards and are provided in a plate (2) and serve to receive chemical and/or biochemical and/or microbiological substances, the plate (2) being deformable by the action of heat and the openings (18) having their orifices in the upper side (5) thereof, the installation having a receiving device for receiving the plate (2), which may be covered by a coverplate, a welding device for joining the coverplate (49) with said plate (2), and a delivery device for the welding device, via which device the welding device can be brought into contact with the coverplate (49) covering the wells (11), wherein the welding device comprises at least one welding die (59) which has projecting profiled regions on its front face (58), wherein the front face (58) of the welding die (59) faces towards the receiving device; characterized in that the projecting profiled regions have pyramids (65) which are arranged in the form of a ring and at their base (66) are constructed as a single piece with the welding die (59) and have their tips (67) facing away from the welding die (59), the pyramids (65) delimit between them a recess (63) which has a larger cross-section than the openings (18) of the wells (11), the pyramids (65) are arranged in rows (68, 69) offset relative to one another, and the pyramids (65) have a height, measured between their base (66) and their tip (67), which is greater than the thickness of the coverplate (49).

13. The installation of claim 12, characterized in that a welding die (59) is provided for each well (11) to be sealed.

14. The installation of claim 12, characterized in that a heating device is provided for the at least one welding die (59).

15. The installation of claims 13 and 14, characterized in that the heating device provided is a heating block made of metal, preferably made of copper, with which the dies are in thermal contact and into which the dies (59) are fitted from below.

16. The installation of claim 12, characterized in that a holding device which can be mounted on the receiving device is provided for the plate (2).

17. The installation of claims 13 and 16, characterized in that the holding device is a perforated mask (96) in which a through-hole (97) is provided for each die (59), which through-hole is aligned centrally and in the longitudinal direction to a well (11) to be sealed when the plate (2) is arranged between the receiving device and the perforated mask (96).

18. The installation of claim 12, characterized in that the delivery device has an electrically controllable motor (84).

19. The installation of claim 12, characterized in that a cooling device is provided for the receiving device.

20. The installation of claim 19, characterized in that a negative mold of the wells is arranged on the receiving device, which negative mold can be brought in engagement with the wells (11), which have protuberances (21) projecting downwards beneath the plate (2).

21. The installation of claims 15, 17, 18 and 20, characterized in that said installation has a baseplate (79) on which a receiving block (93) containing cups (95) as the negative mold is arranged as holding device, a top plate (80) which carries the motor (84) and is joined to the baseplate via guide rods (81) is arranged above the baseplate (79), a support plate (82), which is controlled by the guide rods (81) and is connected to the motor (84) via gearing and on which the heating block (89) is arranged facing downwards, is arranged between the baseplate (79) and the top plate (80), and a cooling device is provided for the support plate (82).

## Revendications

1. Procédé de fermeture d'au moins une cuvette (11) parmi un nombre de cuvettes (11) avec leurs ouvertures (18) dirigées vers le haut, qui sont prévues dans une plaque (2) et qui servent à recevoir des substances chimiques et/ou biochimiques et/ou microbiologiques, la plaque (2) étant thermiquement déformable et les ouvertures (18) débouchant dans sa face supérieure (5), comportant les étapes suivantes :

   a) pose d'une plaque de couverture (49) thermiquement déformable sur la face supérieure (5) de la plaque (2), au moins l'ouverture (18) d'au moins une cuvette (11) à fermer étant recouverte par une zone (57) de la plaque de couverture (49) avec sa face supérieure (51) dirigée vers le haut, puis

   b) application d'un cordon d'assemblage (55), entourant au moins l'ouverture (18) de la cuvette (11) à fermer, qui relie au moins la zone (57) recouvrant l'ouverture (18) de la cuvette (11) à fermer, avec la plaque (2),

   caractérisé en ce que le cordon d'assemblage (55) est profilé dans sa section transversale pour augmenter la surface de contact (75) entre la face supérieure (5) de la plaque (2) et la plaque de couverture (49), le matériau de la plaque de couverture (49) pénétrant partiellement dans la face supérieure (5) de la plaque (2).

2. Procédé selon la revendication 1, caractérisé en ce que l'application du cordon d'assemblage (55) comprend l'application d'un cordon d'assemblage (55) refermé sur lui-même.

3. Procédé selon l'une des revendications précédentes, caractérisé en ce que l'application du cordon d'assemblage (55) comprend la réalisation d'une liaison, au moins par endroits, par concordance de forme entre la plaque (2) et la plaque de couverture (49).

4. Procédé selon l'une des revendications précédentes, caractérisé en ce qu'à chaque cuvette (11) est appliqué son propre cordon d'assemblage (55).

5. Procédé selon la revendication 2, caractérisé en ce que le cordon d'assemblage (55) ferme la cuvette (11) de manière étanche aux gaz.

6. Procédé selon les revendications 3 à 5, caractérisé en ce que l'application du cordon d'assemblage (55) comprend les étapes suivantes :

   bb) pose d'un poinçon de soudage (59) présentant sur sa face frontale (58) des zones profilées saillantes, avec la face frontale (58) sur la face supérieure (51) de la plaque de couverture, les zones profilées venant en contact autour de la zone (57) recouvrant l'ouverture (18) avec la face supérieure (51) ; puis

   bd) enfoncement du poinçon de soudage (59) sur une distance définie, de manière que les zones profilées pénètrent au moins dans la plaque de couverture (49) ; puis

   c) enlèvement du poinçon de soudage (59) de la plaque de couverture (49).

7. Procédé selon la revendication 6, caractérisé en ce que

   ba) avant la pose du poinçon de soudage (59) sa face frontale (58) au moins est chauffée à une température voisine de la température du point de fusion d'au moins la plaque de couverture (49), en ce que

   bc) après la pose de la face frontale (58) du poinçon de soudage (59), le poinçon de soudage (59) est laissé dans cette position pendant un premier intervalle de temps défini, et en ce que

   be) après enfoncement du poinçon de soudage (59) dans la plaque de couverture (49), le poinçon de soudage (59) est laissé dans cette position pendant un deuxième intervalle de temps défini.

8. Procédé selon l'une des revendications précédentes, caractérisé en ce que la plaque (2) est posée sur un dispositif de réception, avant application du cordon d'assemblage (55).

9. Procédé selon la revendication 8, caractérisé en ce que le dispositif de réception est maintenu à une température définie et en ce que les cuvettes (11) viennent en contact thermique avec le dispositif de réception lorsqu'elles sont placées sur celui-ci.

10. Procédé selon la revendication 9, caractérisé en ce qu'avant de poser le poinçon de soudage (59), il est placé à partir du haut, sur la plaque de couverture (49), un dispositif de maintien qui presse la plaque de couverture (49) sur la face supérieure (5) de la plaque (2) et qui amène les cuvettes (11) en contact thermique avec le dispositif de réception.

**11.** Procédé selon les revendications 7 et 10, caractérisé en ce que la plaque (2) est réalisée dans une mince feuille de polycarbonate (36) avec une épaisseur (7) inférieure à 0,5 mm, en ce que la plaque de couverture (49) est réalisée dans une mince feuille de polycarbonate d'une épaisseur inférieure à 0,3 mm, en ce que les cuvettes (11) ont une paroi (20) d'une épaisseur (32) inférieure à 0,08 mm et un volume inférieur à 200 mm³, en ce que la distance définie est à peu près égale à l'épaisseur de la plaque de couverture (49), en ce que le premier intervalle de temps est compris entre 5 et 20 secondes, en ce que le deuxième intervalle de temps est compris entre 1 et 5 secondes, et en ce que la température du poinçon de soudage (59) se situe entre 250 °C et 300 °C.

**12.** Dispositif de fermeture d'au moins une cuvette (11) parmi un nombre de cuvettes (11) avec leurs ouvertures (18) dirigées vers le haut, qui sont prévues dans une plaque (2) et qui servent à recevoir des substances chimiques et/ou biochimiques et/ou microbiologiques, la plaque (2) étant thermiquement déformable et les ouvertures (18) débouchant dans sa face supérieure, comportant un dispositif de réception destiné à recevoir la plaque (2), éventuellement recouverte par une plaque de couverture, comportant un dispositif de soudage pour l'assemblage de la plaque de couverture (49) avec la plaque (2), et comportant un dispositif d'avance pour le dispositif de soudage, par lequel le dispositif de soudage est amené en contact avec la plaque de couverture (49) recouvrant les cuvettes (11), le dispositif de soudage comportant au moins un poinçon de soudage (59) présentant sur sa face frontale (58) des zones profilées saillantes, et la face frontale (58) du poinçon de soudage (59) étant tournée vers le dispositif de réception, caractérisé en ce que les zones profilées saillantes présentent des pyramides (65) disposées en couronne, qui à leur base (66) sont réalisées d'une seule pièce avec le poinçon de soudage (59), et dont les sommets (67) sont dirigés à l'opposé du poinçon de soudage (59), en ce que les pyramides (65) délimitent entre elles une découpe (63) qui présente une plus grande section transversale que les ouvertures (18) des cuvettes (11), et en ce que les pyramides (65) sont disposées en rangées (68, 69) décalées les unes par rapport aux autres et présentent une hauteur, mesurée entre leur base (66) et leur sommet (65), qui est supérieure à l'épaisseur de la plaque de couverture (49).

**13.** Dispositif selon la revendication 12, caractérisé en ce que pour chaque cuvette (11) à fermer il est prévu un poinçon de soudage (59).

**14.** Dispositif selon la revendication 12, caractérisé en ce que pour un poinçon de soudage (59) au moins unique il est prévu un dispositif de chauffage.

**15.** Dispositif selon les revendications 13 et 14, caractérisé en ce que comme dispositif de chauffage il est prévu un bloc de chauffage en métal, de préférence en cuivre, avec lequel les poinçons sont en contact thermique et dans lequel les poinçons (59) sont insérés à partir du bas.

**16.** Dispositif selon la revendication 12, caractérisé en ce qu'un dispositif de maintien de la plaque, à placer sur le dispositif de réception est prévu.

**17.** Dispositif selon la revendication 13 et 16, caractérisé en ce que le dispositif de maintien est un masque perforé (96) dans lequel est prévu, pour chaque poinçon (59), un trou débouchant (97), qui, lorsque la plaque (2) est placée entre le dispositif de réception et le masque perforé (96), se trouve au milieu et orienté dans la direction longitudinale vers une cuvette (11) à fermer.

**18.** Dispositif selon la revendication 12, caractérisé en ce que les moyens d'avance comportent un moteur (84) à commande électrique.

**19.** Dispositif selon la revendication 12, caractérisé en ce qu'un dispositif de refroidissement est prévu pour le dispositif de réception.

**20.** Dispositif selon la revendication 19, caractérisé en ce que sur le dispositif de réception est prévue une forme négative des cuvettes, qui peut être amenée en prise avec les cuvettes (11) qui présentent des protubérances (21) faisant saillie vers le bas, sous la plaque (2).

**21.** Dispositif selon les revendications 15, 17, 18 et 20, caractérisé en ce qu'il comporte une plaque de base (79) sur laquelle est placé, comme dispositif de maintien, un bloc de réception (93) avec des coupelles (95) en tant que forme négative, en ce qu'au-dessus de la plaque de base (79) est placée une plaque de tête (80) portant le moteur (84), laquelle plaque de tête est reliée par des tiges de guidage (81) à la plaque de base (79), en ce qu'entre la plaque de base (79) et la plaque de tête (80) est prévue une plaque de support (82) guidée par les tiges de guidage (81), laquelle plaque de support est reliée au moteur (84) par des moyens de transmission et sur laquelle le bloc de chauffage (89) est placé, dirigé vers le bas, et en ce que pour la plaque de support (82) il est prévu un dispositif de refroidissement.

Fig.1

Fig.2

Fig.3

Fig.4

Fig.5

Fig.6

24

Fig. 8

Fig. 7

Fig.9

Fig.10